# FASCICULE DE BREVET EUROPEEN

(11) **EP 3 819 971 B1**
(45) Date de publication et mention de la délivrance du brevet: **08.06.2022**
(21) Numéro de dépôt: 20206039.8
(22) Date de dépôt: 05.11.2020
(51) Int. Cl.: H01M 8/04089, H01M 8/04537, H01M 8/04313, H01M 8/04223, H01M 8/04746, H01M 8/04082

(54) **SYSTÈME ÉLECTROCHIMIQUE À PILE À COMBUSTIBLE ADAPTÉ À COMMUTER ENTRE UN FONCTIONNEMENT EN SURPRESSION ET UN FONCTIONNEMENT EN DÉPRESSION**
ELEKTROCHEMISCHES BRENNSTOFFZELLENSYSTEM, DAS ZWISCHEN ÜBERDRUCK- UND UNTERDRUCKBETRIEB UMSCHALTEN KANN
ELECTROCHEMICAL SYSTEM WITH A FUEL CELL ADAPTED TO SWITCH BETWEEN OPERATION IN OVERPRESSURE AND OPERATION IN REDUCED PRESSURE

(30) Priorité: 08.11.2019 FR 1912562; 16.10.2020 FR 2010658
(43) Date de publication de la demande: 12.05.2021
(73) Titulaire: Commissariat à l'énergie atomique et aux énergies alternatives, 75015 Paris (FR)
(72) Inventeur: PINTON, Éric, 38054 GRENOBLE Cedex 09 (FR); MICOUD, Fabrice, 38054 GRENOBLE Cedex 09 (FR); POIROT-CROUVEZIER, Jean-Philippe, 38054 GRENOBLE Cedex 09 (FR)
(74) Mandataire: INNOV-GROUP

(56) Documents cités:
- JP-A- 2001 185 181
- US-A1- 2002 034 669
- US-A1- 2010 221 642

## Description

### DOMAINE TECHNIQUE

Le domaine de l'invention est celui des systèmes électrochimiques comportant une pile à combustible alimentée en air ainsi qu'une pompe adaptée à imposer un débit d'air dans la cathode de la pile à combustible.

### ÉTAT DE LA TECHNIQUE ANTÉRIEURE

Une pile à combustible comporte habituellement un empilement de cellules électrochimiques qui comprennent chacune une anode et une cathode séparées électriquement l'une de l'autre par un électrolyte, dans laquelle a lieu une réaction électrochimique entre deux réactifs qui sont introduits de manière continue. Dans le cas d'une pile à hydrogène, le combustible (l'hydrogène) est apporté au contact de l'anode, alors que le comburant (l'oxygène par exemple contenu dans de l'air) est amené au contact de la cathode. La réaction électrochimique est subdivisée en deux demi-réactions, l'une d'oxydation et l'autre de réduction, qui ont lieu respectivement à l'interface anode/électrolyte et à l'interface cathode/électrolyte. Pour avoir lieu, la réaction électrochimique requiert la présence d'un conducteur ionique entre les deux électrodes, à savoir l'électrolyte par exemple contenu dans une membrane polymère, et un conducteur électronique formé par le circuit électrique externe. L'empilement de cellules est ainsi le lieu de la réaction électrochimique : les réactifs y sont apportés, les produits et les espèces non réactives en sont évacués ainsi que la chaleur produite lors de la réaction.

Habituellement, l'air alimentant la cathode de la pile à combustible est en surpression, c'est-à-dire que sa pression à l'entrée cathodique est supérieure à la pression atmosphérique. En effet, il est connu que le rendement de la conversion électrochimique est d'autant plus élevé que la pression partielle d'oxygène est importante. Le fonctionnement en surpression permet donc d'obtenir de fortes densités de puissance. Aussi, un compresseur est disposé sur la ligne fluidique d'alimentation en air de la pile à combustible. Il permet ainsi de mettre l'air en surpression à l'entrée cathodique de la pile à combustible, tout en imposant un débit d'air entre l'entrée et la sortie d'air du système électrochimique.

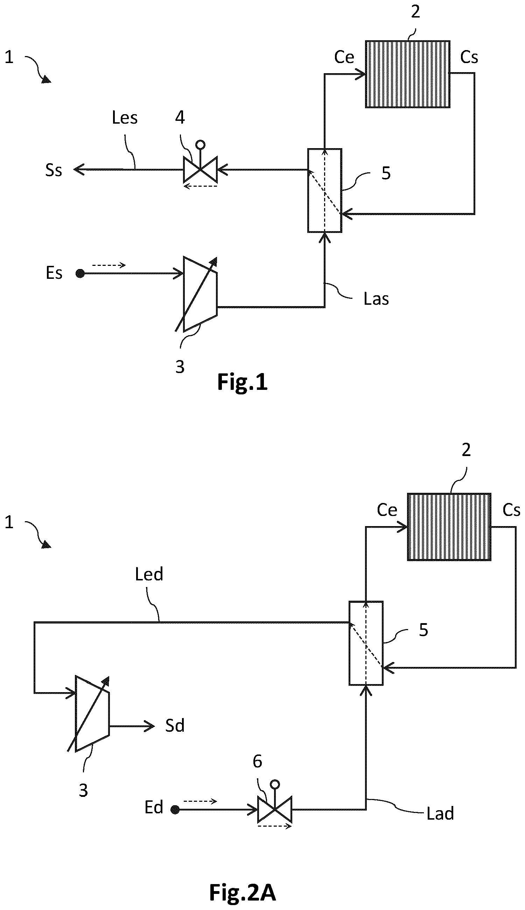

A ce titre, la figure 1 illustre un exemple d'un tel système électrochimique 1 adapté à fonctionner en surpression. Il comporte une entrée Es et une sortie Ss d'air. Une ligne fluidique d'alimentation Las relie l'entrée Es au collecteur d'entrée cathodique Ce de la pile à combustible 2, et une ligne fluidique d'évacuation Les relie le collecteur de sortie Cs à la sortie Ss. Un compresseur 3 est disposé sur la ligne fluidique d'alimentation Las, et un régulateur de pression 4 est disposé sur la ligne fluidique d'évacuation Les. Ce régulateur de pression 4 permet de maintenir constante la pression à l'entrée cathodique Ce de la pile à combustible 2. Par ailleurs, un humidificateur 5 (par ex. à membrane) est habituellement disposé sur la ligne fluidique d'alimentation Las tout en étant raccordé à la ligne fluidique d'évacuation Les. Cependant, un tel système électrochimique est sujet à des phénomènes de dégradation des caractéristiques physico-chimiques de la pile à combustible, en particulier lorsqu'il génère une faible puissance électrique.

Il existe également des configurations dans lesquelles le système électrochimique peut fonctionner en dépression, comme décrit notamment dans les documents JP2001185181A et US2002/034669A1.

### EXPOSÉ DE L'INVENTION

L'invention a pour objectif de remédier au moins en partie aux inconvénients de l'art antérieur, et plus particulièrement de proposer un système électrochimique permettant d'optimiser les performances électrochimiques d'une part, et de minimiser certains phénomènes de dégradation des caractéristiques électrochimiques et physico-chimiques de la pile à combustible d'autre part, en particulier lorsqu'il fonctionne à faible puissance électrique générée, voire d'autoriser une 'régénération' des performances électrochimiques de la pile à combustible du fait de la réversibilité de certains phénomènes de dégradation.

Pour cela, l'objet de l'invention est un système électrochimique adapté à fonctionner en dépression vis-à-vis d'une pression de référence prédéfinie, comportant : une pile à combustible comportant un entrée cathodique et une sortie cathodique adaptées à assurer un écoulement d'oxygène dans la pile à combustible ; une première ligne fluidique d'alimentation, reliant une première entrée d'oxygène à la pression de référence à l'entrée cathodique ; une première ligne fluidique d'évacuation, reliant la sortie cathodique à une première sortie ; une pompe adaptée à imposer un débit d'oxygène dans les premières lignes fluidiques d'alimentation et d'évacuation.

Le système électrochimique comporte un réducteur de pression, disposé sur la première ligne fluidique d'alimentation, et adapté à imposer à l'oxygène le traversant une pression inférieure à la pression de référence. De plus, la pompe est disposée sur la première ligne fluidique d'évacuation, de sorte qu'en fonctionnement en dépression, l'oxygène circule à partir de la première entrée jusqu'à la première sortie, la pression d'oxygène à l'entrée cathodique étant en dépression vis-à-vis de la pression de référence.

Selon l'invention, le système électrochimique est adapté à commuter entre le fonctionnement en dépression et un fonctionnement dit en surpression vis-à-vis de la pression de référence. Il comporte alors une deuxième ligne fluidique d'alimentation, reliant une deuxième entrée d'oxygène à la pression de référence à l'entrée cathodique ; une deuxième ligne fluidique d'évacuation, reliant la sortie cathodique à une deuxième sortie ; un régulateur de pression, adapté à maintenir constante la pression d'oxygène à l'entrée cathodique, et disposé sur la deuxième ligne fluidique d'évacuation.

La pompe est adaptée à imposer un débit d'oxygène dans les deuxièmes lignes fluidiques d'alimentation et d'évacuation, et étant disposée sur la deuxième ligne fluidique d'alimentation. De plus, les deuxièmes lignes fluidiques d'alimentation et d'évacuation étant agencées de sorte qu'en fonctionnement en surpression, l'oxygène circule à partir de la deuxième entrée jusqu'à la deuxième sortie, la pression d'oxygène à l'entrée cathodique étant maintenue en surpression par rapport à la pression de référence.

Certains aspects préférés mais non limitatifs de ce système électrochimique sont les suivants.

Le réducteur de pression peut, en outre, être adapté à maintenir constante la pression d'air à l'entrée cathodique.

La pompe peut être un compresseur, ou peut comporter au moins un éjecteur associé à au moins une source de gaz comprimé formant un fluide moteur, l'éjecteur comportant une entrée primaire reliée à la source et une entrée secondaire reliée à la première ligne fluidique d'évacuation.

La première entrée peut être distincte de la deuxième sortie, et la première sortie peut être distincte de la deuxième entrée.

Le réducteur de pression peut être distinct du régulateur de pression.

La première ligne fluidique d'alimentation et la deuxième ligne fluidique d'alimentation peuvent être raccordées à une même première ouverture de la pile à combustible formant le collecteur d'entrée ; et la première ligne fluidique d'évacuation et la deuxième ligne fluidique d'évacuation peuvent être raccordées à une même deuxième ouverture de la pile à combustible formant le collecteur de sortie.

La première ligne fluidique d'évacuation et la deuxième ligne fluidique d'alimentation peuvent être raccordées à une même première entrée de la pompe.

La première entrée et la deuxième sortie peuvent être confondues, et la première sortie et la deuxième entrée peuvent être distinctes.

La première ligne fluidique d'alimentation et la deuxième ligne fluidique d'évacuation peuvent être confondues et être raccordées à une même deuxième ouverture de la pile à combustible formant le collecteur d'entrée en mode dépression et formant le collecteur de sortie en mode surpression. La première ligne fluidique d'évacuation et la deuxième ligne fluidique d'évacuation peuvent être en partie distinctes, et être raccordées à une même première ouverture de la pile à combustible formant le collecteur de sortie en mode dépression et formant le collecteur d'entrée en mode surpression.

La pompe peut comporter au moins un éjecteur associé à au moins une source de gaz comprimé formant un fluide moteur. La source peut être un compresseur comportant une entrée reliée à la deuxième entrée et une sortie reliée à l'entrée cathodique et à l'entrée primaire de l'éjecteur.

La sortie du compresseur peut être raccordée à l'entrée cathodique d'une part et à une entrée de l'éjecteur d'autre part par des lignes fluidiques au moins en partie distinctes ; ou peut être raccordée à l'entrée cathodique par une même ligne fluidique passant par une entrée et une sortie de l'éjecteur.

La sortie du compresseur peut être raccordée à l'entrée cathodique par une même ligne fluidique passant par l'entrée secondaire et par la sortie de l'éjecteur.

La pompe peut comporter un compresseur comportant en entrée reliée à une source de gaz et une sortie reliée à l'entrée primaire de l'éjecteur. Un compresseur distinct du compresseur de la pompe peut être relié à la deuxième entrée et à l'entrée cathodique.

Le système électrochimique peut comporter une même pompe disposée sur la deuxième ligne fluidique d'alimentation et sur la première ligne d'évacuation ; ou comporter une première pompe disposée sur la deuxième ligne fluidique d'alimentation, et une deuxième pompe distincte de la première pompe et disposée sur la première ligne d'évacuation.

La première entrée et la deuxième sortie peuvent être confondues, et la première sortie et la deuxième entrée être confondues.

La première ligne fluidique d'évacuation et la deuxième ligne fluidique d'alimentation peuvent être confondues, et le système électrochimique peut comporter une même pompe.

Le réducteur de pression et le régulateur de pression peuvent être confondus.

L'invention porte également sur un procédé de fonctionnement du système électrochimique commutable selon l'une quelconque des caractéristiques précédentes, comportant une étape de mesure d'un paramètre d'intérêt représentatif de la pile à combustible, et une étape de commutation entre : une phase de fonctionnement en dépression lorsque le paramètre d'intérêt atteint une première valeur seuil prédéfinie ; et une phase de fonctionnement en surpression lorsque le paramètre d'intérêt atteint une deuxième valeur seuil prédéfinie.

Le paramètre d'intérêt est un signal électrique représentatif de la puissance électrique générée par la pile à combustible ou de la tension électrique de la pile à combustible, ou être une durée de fonctionnement en dépression ou en surpression.

Le paramètre d'intérêt peut être représentatif de la puissance électrique générée par la pile à combustible, auquel cas il y a commutation entre : la phase de fonctionnement en dépression lorsque le paramètre d'intérêt est inférieur ou égal à une valeur seuil prédéfinie ; et la phase de fonctionnement en surpression lorsque le paramètre d'intérêt est supérieur à la valeur seuil prédéfinie.

Le paramètre d'intérêt peut en outre être représentatif d'une dégradation de propriétés physico-chimiques de la pile à combustible, auquel cas il y a commutation entre : la phase de fonctionnement en dépression lorsque le paramètre d'intérêt atteint une première valeur seuil prédéfinie ; et la phase de fonctionnement en surpression lorsque le paramètre d'intérêt atteint une deuxième valeur seuil prédéfinie ou lorsqu'une durée de fonctionnement en dépression est supérieure ou égale à une valeur seuil prédéfinie.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1, déjà décrite, est une vue partielle et schématique d'un système électrochimique selon un exemple de l'art antérieur, dans lequel il est adapté à fonctionner en surpression ;
la figure 2A est une vue partielle et schématique d'un système électrochimique, dans lequel il est adapté à fonctionner en dépression, dans lequel la pompe est un compresseur ; la figure 2B est une vue partielle et schématique d'une variante du système électrochimique de la fig.2A, dans laquelle la pompe comporte un éjecteur ; la figure 2C est une vue partielle et schématique d'une variante du système électrochimique de la fig.2B, dans laquelle la pompe comporte plusieurs éjecteurs ;
les figures 3A et 3B sont des vues partielles et schématiques d'un système électrochimique selon un premier mode de réalisation, dans lequel il est adapté à commuter entre les fonctionnements en dépression (fig.3A) et en surpression (fig.3B), et dans lequel il comporte une entrée Ed et une sortie Sd d'air pour le fonctionnement en dépression qui sont distinctes de l'entrée Es et de la sortie Ss d'air pour le fonctionnement en surpression, la pompe étant formée d'un compresseur ;
les figures 4A et 4B sont des vues partielles et schématiques de variantes du système électrochimique illustré sur les fig.3A, 3B, dans lesquelles le circuit fluidique est simplifié (fig.4A), et le réducteur de pression est simplifié et n'assure pas ici la régulation de la pression cathodique (fig.4B) ;
les figures 5A et 5B sont des vues partielles et schématiques d'un système électrochimique selon un deuxième mode de réalisation, dans lequel il est adapté à commuter entre les fonctionnements en dépression (fig.5A) et en surpression (fig.5B), et dans lequel l'entrée d'air Ed du fonctionnement en dépression est confondue avec la sortie d'air Ss du fonctionnement en surpression, la pompe étant formée d'un compresseur ;
les figures 6A et 6B sont des vues partielles et schématiques d'une variante du système électrochimique illustré sur les fig.5A, 5B, adaptée à commuter entre les fonctionnements en dépression (fig.6A) et en surpression (fig.6B), et comportant deux compresseurs distincts ;
les figures 7A et 7B sont des vues partielles et schématiques d'un système électrochimique selon un troisième mode de réalisation, dans lequel il est adapté à commuter entre les fonctionnements en dépression (fig.7A) et en surpression (fig.7B), et dans lequel l'entrée d'air Ed du fonctionnement en dépression et la sortie d'air Ss du fonctionnement en surpression sont confondues, et dans lequel l'entrée d'air Es du fonctionnement en surpression et la sortie d'air Sd du fonctionnement en dépression sont confondues, la pompe étant formée d'un compresseur ;
les figures 8A et 8B sont des vues partielles et schématiques d'un système électrochimique selon une variante du premier mode de réalisation, qui diffère de celui illustré sur les fig.3A et 3B essentiellement en ce que la pompe comporte un éjecteur ;
les figures 9A et 9B sont des vues partielles et schématiques d'un système électrochimique selon une variante du deuxième mode de réalisation, qui diffère de celui illustré sur les fig.5A et 5B essentiellement en ce que la pompe comporte un éjecteur ;
les figures 10A et 10B sont des vues partielles et schématiques d'une variante du système électrochimique illustré sur les fig.9A, 9B, comportant deux compresseurs distincts ;
la figure 11A est une vue partielle et schématique d'une variante du système électrochimique illustré sur les fig.8A et 8B, dans lequel l'éjecteur est situé sur la ligne d'alimentation de la pile à combustible lors du fonctionnement en surpression ;
la figure 11B est une vue partielle et schématique d'une variante du système électrochimique illustré sur les fig.9A et 9B, dans lequel l'éjecteur est situé sur la ligne d'alimentation de la pile à combustible lors du fonctionnement en surpression.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur un système électrochimique comportant une pile à combustible adapté à commuter entre un fonctionnement en dépression et un fonctionnement en surpression, c'est-à-dire que la pression du gaz comburant à l'entrée cathodique de la pile à combustible bascule entre une valeur inférieure et une valeur supérieure à une pression de référence prédéfinie.

La pile à combustible est ici une pile à hydrogène : le gaz combustible est de l'hydrogène et le gaz comburant contient de l'oxygène. Il peut être de l'oxygène pur ou de l'air contenant de l'oxygène. Dans la suite de la description, on considérera que le gaz comburant est de l'air (contenant donc de l'oxygène).

La pile à combustible comporte au moins une cellule électrochimique, et de préférence un empilement de cellules, chacune ayant un assemblage membrane électrodes. La membrane est un polymère solide qui forme un électrolyte. Les électrodes comportent chacune une couche active formée d'un catalyseur, de préférence du platine, disposé sur un support poreux électriquement conducteur, de préférence carboné, et d'un ionomère assurant la conductivité protonique.

Le gaz comburant à l'entrée du système électrochimique présente une pression de référence P_{ref}, qui peut être égale à la pression atmosphérique. Cette pression de référence P_{ref} est de préférence constante, que le système électrochimique fonctionne en dépression ou en surpression. De préférence, comme détaillé par la suite, le système électrochimique fonctionne en dépression lorsque la pile à combustible génère une faible puissance électrique, et, lorsqu'il est commutable entre des fonctionnements en dépression et en surpression, fonctionne en surpression lorsque la pile à combustible génère une puissance électrique d'une valeur supérieure à une valeur seuil prédéfinie.

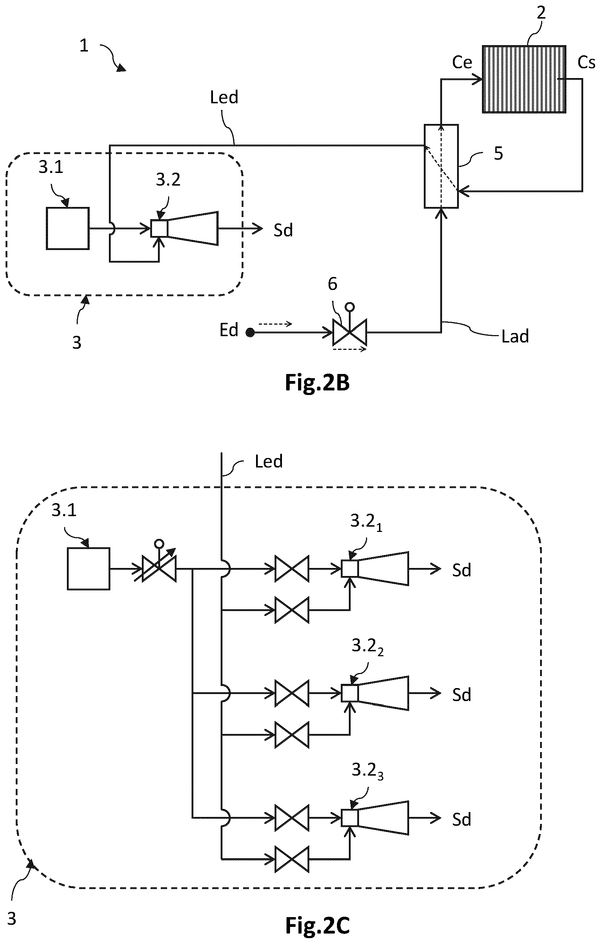

La figure 2A illustre de manière schématique et partielle un système électrochimique 1 adapté à fonctionner en dépression. Dans cet exemple, la pompe est un compresseur. Le système électrochimique 1 comporte *a minima* une pile à combustible 2 reliée à une entrée Ed et à une sortie Sd d'air par des lignes fluidiques, une pompe 3 (ici un compresseur), et un réducteur de pression 6. D'une manière générale, une pompe est un dispositif adapté à aspirer et à refouler un fluide. Dans le cadre de l'invention, la pompe 3 est adaptée à imposer un débit d'oxygène (par exemple d'air) dans les premières lignes fluidiques d'alimentation Lad et d'évacuation Led. En variante, comme illustré plus loin, la pompe peut être un éjecteur associé à une source de gaz comprimé (cf. fig.2B). La pompe peut même comporter une pluralité d'éjecteurs raccordés à une ou à plusieurs sources (cf. fig.2C).

La pile à combustible 2 comporte au moins une cellule électrochimique, et ici un empilement de cellules électrochimiques (non représentées). Chaque cellule comporte une anode et une cathode séparées l'une de l'autre par une membrane électrolytique, cet ensemble formant un assemblage membrane-électrodes (AME). L'anode, la membrane et la cathode sont des éléments classiques connus de l'homme du métier et ne sont donc pas décrites en détail.

Chaque AME est séparé de celui des cellules adjacentes par des plaques bipolaires, lesquelles sont adaptées à amener les espèces réactives à l'anode d'une première cellule d'une part et à la cathode d'une cellule adjacente d'autre part, et à évacuer les produits issus des réactions électrochimiques et les espèces non réactives, ainsi qu'à transmettre le courant électrique entre les cellules. Les plaques bipolaires peuvent également assurer l'écoulement d'un fluide caloporteur entre les cellules de manière à permettre l'évacuation de la chaleur produite.

La pile à combustible 2 comporte deux collecteurs d'entrée distincts, l'un anodique et l'autre cathodique, destinés à assurer l'injection fluidique des gaz d'alimentation jusqu'aux cellules, et deux collecteurs de sorties distincts correspondants, permettant d'évacuer les gaz d'alimentation n'ayant pas réagi et les espèces non réactives hors des cellules électrochimiques et de la pile à combustible 2. Ainsi, l'air est injecté dans la pile à combustible 2 par le collecteur d'entrée cathodique Ce qui l'amène jusqu'aux cellules électrochimiques. L'air en excès et les espèces non réactives sont ensuite évacués par le collecteur de sortie Cs correspondant.

La pile à combustible 2 est alimentée en oxygène, ici en air, à partir d'une entrée Ed fournissant de l'air à une pression de référence, ici à la pression atmosphérique. Celle-ci est reliée au collecteur d'entrée cathodique Ce par une ligne fluidique d'alimentation Lad. Le collecteur de sortie cathodique Cs est relié à la sortie Sd par une ligne fluidique d'évacuation Led. De préférence, un humidificateur 5 est disposé sur la ligne fluidique d'alimentation Lad, et ici sur la ligne fluidique d'évacuation Led de manière à augmenter l'humidité de l'air entrant à la cathode de la pile à combustible 2.

La pile à combustible 2 peut être connectée à une charge électrique (non représentée) adaptée à imposer à la pile à combustible 2 un signal de commande correspondant à la valeur du courant électrique à fournir. La pile à combustible 2 fonctionne alors en régime dit de courant imposé. A titre illustratif, la charge électrique peut être un moteur électrique, une batterie électrique, un supercondensateur ou autre. Ainsi, la densité de courant électrique générée par la pile à combustible 2 dépend de la demande de la charge électrique, et la tension électrique prend une valeur définie par la courbe de polarisation correspondante. La courbe de polarisation exprime l'évolution de la tension électrique en fonction de la densité de courant d'une cellule électrochimique. Une telle courbe est fonction des caractéristiques physico-chimiques intrinsèques de la cellule électrochimique et des conditions opératoires.

Le réducteur de pression 6 est disposé sur la ligne fluidique d'alimentation Lad, entre l'entrée Ed et le collecteur d'entrée Ce, et ici en amont de l'humidificateur 5. Il est adapté à diminuer la pression de l'air le traversant en amont de son entrée d'aspiration via la ligne fluidique d'évacuation Led. Ainsi, en amont du réducteur de pression 6, l'air est à la pression de référence P_{ref} (ici la pression atmosphérique), moyennant les pertes de charge associées au conduit de la ligne fluidique d'alimentation Lad, et l'air en aval, et notamment à l'entrée cathodique Ce, est à une pression inférieure à la pression de référence P_{ref}. Il est donc en dépression.

Le réducteur de pression 6 peut en outre être adapté à réguler la pression aval, en particulier la pression à l'entrée cathodique de la pile à combustible 2, pour la maintenir constante, et de préférence pour maintenir la tension électrique des cellules électrochimiques de la pile à combustible 2 à une valeur inférieure ou égale à 0.8V, et de préférence comprise entre 0.7V et 0.8V. En variante, une valeur de tension électrique des cellules électrochimiques de la pile à combustible 2 inférieure à 0.7 V, peut également être avantageuse dans la mesure où elle peut permettre la régénération de la couche active cathodique par la réversibilité de certains phénomènes de dégradation, comme notamment l'oxydation du platine. Le réducteur de pression 6 peut être un détendeur. En variante au contrôle en tension, le niveau de dépression peut être ajusté de manière à respecter une pression cible pré-calibrée. Dans ce dernier cas, la tension de cellule est la conséquence de la dépression et du point de fonctionnement.

La pompe 3 est disposée sur la ligne fluidique d'évacuation Led, entre le collecteur de sortie Cs et la sortie Ss. Elle impose un débit d'air entre l'entrée Ed et la sortie Sd. Le fait qu'elle augmente ou diminue le débit d'air la traversant n'a pas ici de conséquence sur la pression de l'air dans la pile à combustible 2 qui est contrôlée/imposée par le réducteur de pression 6.

Ainsi, le système électrochimique 1 ici est adapté à fonctionner en dépression, dans le sens où le gaz comburant (ici de l'air) à l'entrée cathodique de la pile à combustible 2 présente une pression inférieure à la pression de référence, ici une pression inférieure à la pression atmosphérique.

Ce mode de fonctionnement en dépression permet de limiter la dégradation des caractéristiques physico-chimiques de la pile à combustible 2, dégradation issue de phénomènes de dégradation réversible ou irréversible, en particulier lorsque la pile à combustible 2 fonctionne à faible puissance électrique générée, par exemple lorsque la densité de courant électrique demandée à chaque cellule électrochimique est faible, par exemple inférieure ou égale à 0.2 A/cm² environ. En effet, dans ce cas de figure, la tension électrique peut alors être élevée, par exemple de l'ordre de 0.8V ou davantage, et des phénomènes notamment de corrosion du support carboné de la couche active et d'oxydation du platine peuvent avoir lieu.

La corrosion du support carboné de la couche active est un phénomène de dégradation irréversible qui peut conduire à une perte du catalyseur du fait de la détérioration de son support. Cette réaction chimique a lieu en présence de carbone, d'oxygène et de vapeur d'eau. Elle s'accélère avec l'augmentation de la pression d'oxygène au contact des sites catalytiques et devient prépondérante pour un potentiel de pile supérieur à 0.8V. Par ailleurs, l'oxydation du platine est un phénomène de dégradation réversible qui conduit à une réduction de la surface des sites actifs. Il apparaît que la diminution de la concentration d'oxygène à la cathode couplée au fonctionnement à plus bas potentiel permet de diminuer la cinétique de ces réactions d'oxydation réversible du Pt et irréversible du support carboné. Cela permet ainsi de limiter la dégradation des caractéristiques physico-chimiques de la pile à combustible 2, et donc de préserver les performances du système électrochimique 1.

Aussi, dans la mesure où l'air à l'entrée cathodique est en dépression, la pression partielle d'oxygène, et donc la concentration d'oxygène, est diminuée par rapport à sa valeur dans le cas d'un fonctionnement du système électrochimique 1 à la pression de référence ou en surpression. Cette diminution de la concentration d'oxygène à la cathode de la pile à combustible 2 permet ainsi, lorsque la pile à combustible 2 fonctionne à faible puissance électrique générée et en particulier à faible densité de courant générée, de réduire la cinétique des phénomènes de corrosion du support carboné et d'oxydation du platine, et de dissolution/redéposition du platine (conséquence de la corrosion du carbone et de l'oxydation du platine).

Une telle situation où la pile à combustible 2 fonctionne à faible puissance électrique générée, et en particulier à faible densité de courant générée, se trouve notamment lorsque le système électrochimique 1 est en *standby,* c'est-à-dire que la pile à combustible 2 fournit un courant électrique dont la valeur permet de faire fonctionner essentiellement les organes du système électrochimique 1 tels que des vannes, régulateurs, ou autres.

La figure 2B illustre une variante du système électrochimique 1 de la fig.2A, dans laquelle la pompe 3 est formée d'une source 3.1 de gaz comprimé et d'un éjecteur 3.2. La source 3.1 est raccordée à une entrée principale de l'éjecteur 3.2, et la ligne d'évacuation Led est raccordée à une entrée secondaire de l'éjecteur 3.2. La sortie de l'éjecteur est raccordée à la sortie Sd. Ainsi, le gaz comprimé injecté à l'entrée primaire de l'éjecteur forme un fluide dit moteur, et l'air circulant dans la ligne fluidique d'évacuation Led et injecté dans l'entrée secondaire forme le gaz dit aspiré. Le fluide moteur, par son débit, provoque par effet Venturi l'écoulement du gaz dans la ligne fluidique d'évacuation Led. En conséquence, l'air circulant dans les lignes fluidiques Lad et Led est aspiré par la pompe 3 à partir de l'entrée Ed et est refoulé à la sortie Sd.

Le débit d'air dans la ligne d'évacuation Led et donc dans la pile à combustible 2 peut être contrôlé par le pilotage de la pression à l'entrée primaire de l'éjecteur 3.2, par exemple au moyen d'un détecteur ou tout autre régulateur de pression (non représenté), disposé entre la source 3.1 et l'éjecteur 3.2. La pression de l'air dans la pile à combustible reste définie par le réducteur de pression 6. Le fait que la pompe 3 soit réalisée en une source de gaz comprimé 3.1 et d'au moins un éjecteur 3.2 permet de simplifier la réalisation du système électrochimique 1 et de faciliter l'intégration de la pompe 3. Le coût associé est également réduit.

La figure 2C illustre une variante du système électrochimique 1 de la fig.2B, dans laquelle la pompe 3 comporte une pluralité d'éjecteurs raccordée à la source 3.1 en parallèle les uns avec les autres. Dans cet exemple, trois éjecteurs 3.2ᵢ avec i=1 à 3 sont prévus, mais la pompe 3 peut en comporter davantage. Le nombre d'éjecteurs 3.2ᵢ raccordés à la source 3.1 dépend notamment de la plage du débit d'air dans les lignes fluidiques Lad et Led que le système électrochimique 1 est destiné à couvrir. Pour contrôler le nombre d'éjecteurs actifs, chaque éjecteur 3.2ᵢ est raccordé à un jeu de vannes permettant d'autoriser ou bloquer l'accès aux entrées primaire et secondaire des éjecteurs 3.2ᵢ. Par ailleurs, un régulateur de pression (par ex. un détendeur) peut être présent à la sortie de la source 3.1 (et en amont des vannes raccordées aux entrées primaires) pour réguler la pression du gaz comprimé.

Par ailleurs, en variante, la pompe 3 peut comporter plusieurs sources 3.1ᵢ de gaz comprimé, chaque source 3.1ᵢ étant raccordée à l'entrée primaire de l'éjecteur 3.2ᵢ correspondant. La même ligne fluidique Led est toujours raccordée aux entrées secondaires des différents éjecteurs 3.2ᵢ. Les sorties des différents éjecteurs 3.2ᵢ peuvent bien entendu être raccordées à la même sortie Sd.

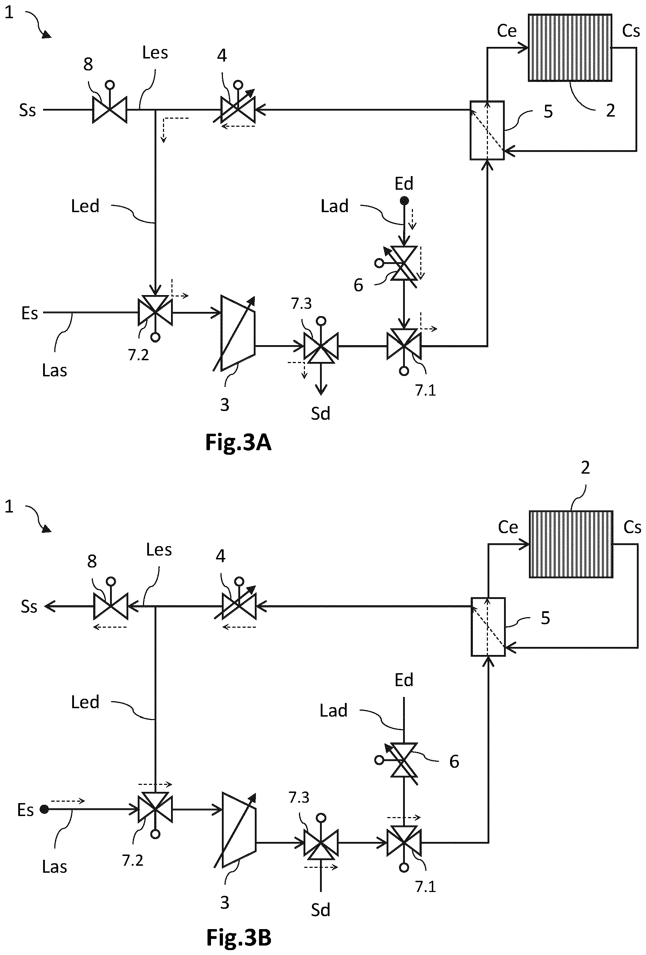

Les figures 3A et 3B illustrent schématiquement et partiellement un système électrochimique 1 selon un premier mode de réalisation de l'invention, dans lequel il est apte à commuter entre un fonctionnement en dépression (fig.3A) et un fonctionnement en surpression (fig.3B). Le système électrochimique 1 est alors dit commutable. Dans cet exemple, la pompe 3 est un compresseur.

En fonctionnement, le système électrochimique 1 est alors apte à commuter entre les fonctionnements en dépression et en surpression en fonction d'une valeur seuil prédéterminée de la puissance électrique, ou d'un paramètre équivalent, par exemple la densité de courant électrique ou la tension de pile. Ainsi, lorsque la puissance électrique générée est inférieure ou égale à une valeur seuil, par exemple est inférieure ou égale de 10% ou 20% de la puissance électrique nominale, le système électrochimique 1 commute dans le fonctionnement en dépression, et lorsqu'elle est supérieure à cette valeur seuil, le système électrochimique 1 commute dans le fonctionnement en surpression. A titre illustratif, la commutation peut être effectuée selon que la densité de courant électrique est inférieure ou supérieure à une valeur de l'ordre de 0.2A/cm², et/ou que la tension électrique des cellules (ou tension moyenne) est supérieure ou égale à 0.8V.

Le système électrochimique commutable 1 comporte ici des premières entrée Ed et sortie Sd d'air destiné à être fourni à la pile à combustible 2 pour le fonctionnement en dépression, et des deuxièmes entrée Es et sortie Ss d'air destiné à être fourni à la pile à combustible 2 pour le fonctionnement en surpression. Dans ce mode de réalisation illustré sur les fig.3A et 3B, les premières entrée et sortie Ed, Sd (prévues pour le fonctionnement en dépression) sont distinctes des deuxièmes entrée et sortie Es, Ss (prévues pour le fonctionnement en surpression).

Il comporte également des premières lignes fluidiques d'alimentation Lad et d'évacuation Led pour le fonctionnement en dépression, et des deuxièmes lignes fluidiques Las d'alimentation et d'évacuation Les pour le fonctionnement en surpression. Plus précisément, les lignes fluidiques d'alimentation Lad et Las relient respectivement l'entrée Ed et l'entrée Es au collecteur d'entrée Ce, et les lignes fluidiques d'évacuation Led et Les relient le collecteur de sortie Cs à, respectivement, la sortie Sd et la sortie Ss. Ici, le collecteur d'entrée Ce correspond à la même ouverture de la pile à combustible 2, quel que soit le type de fonctionnement (dépression ou surpression) dans la mesure où l'air circule dans le même sens en dépression comme en surpression. Il en est de même pour le collecteur de sortie Cs.

Les premières lignes fluidiques Lad et Led sont chacune au moins en partie distincte des deuxièmes lignes fluidiques Las et Les. De plus, les lignes fluidiques d'alimentation Lad et Las comportent chacune une partie propre et une partie commune entre elles. Les parties propres s'étendent respectivement entre l'entrée Es et l'entrée Ed et une vanne trois voies 7.1, et la partie commune s'étend de la vanne trois voies 7.1 jusqu'au collecteur d'entrée Ce.

Le système électrochimique commutable 1 comporte ici un réducteur de pression 6 disposé sur la partie propre de la ligne fluidique d'alimentation Lad, donc entre l'entrée Ed et la vanne trois voies 7.1 ; et un compresseur 3 disposé sur une partie commune de la ligne fluidique d'évacuation Led et de la ligne fluidique d'alimentation Las, entre une vanne trois voies 7.2 et une vanne trois voies 7.3. Il comporte également un régulateur de pression 4, lequel est disposé ici sur la ligne fluidique d'évacuation Les, ici sur une partie commune des lignes fluidiques d'évacuation Les et Led, mais il peut être situé sur la partie de la ligne d'évacuation Les qui est distincte de la ligne Led (par ex. entre Ss et la vanne 8). Dans ce mode de réalisation, le réducteur de pression 6 est distinct du régulateur de pression 4. Par ailleurs, un humidificateur 5 est disposé sur la partie commune des lignes fluidiques d'alimentation Lad et Las et sur une partie commune des lignes fluidiques d'évacuation Led et Les.

Autrement dit, la ligne fluidique d'alimentation Lad comporte, dans le sens allant de l'entrée Ed au collecteur d'entrée Ce, le réducteur de pression 6, la vanne trois voies 7.1, et l'humidificateur 5. La ligne fluidique d'alimentation Las comporte, dans le sens allant de l'entrée Es au collecteur d'entrée Ce, une vanne trois voies 7.2, le compresseur 3, une vannée trois voies 7.3, la vanne trois voies 7.1, et l'humidificateur 5. La ligne fluidique d'évacuation Led comporte, dans le sens allant du collecteur de sortie Cs vers la sortie Sd, l'humidificateur 5, le régulateur de pression 4, la vanne trois voies 7.2, le compresseur 3, et la vanne trois voies 7.3. La ligne fluidique d'évacuation Les comporte, dans le sens allant du collecteur de sortie Cs vers la sortie Ss, l'humidificateur 5, le régulateur de pression 4, et une vanne simple 8.

Aussi, il en ressort de cette configuration fluidique que l'écoulement d'air au sein de la pile à combustible 2 ne change pas de sens selon que le système électrochimique 1 fonctionne en dépression (fig.3A) ou en surpression (3B). De plus, l'écoulement d'air dans le compresseur 3 garde également le même sens. Ceci a pour avantage, par rapport à un mode inversé, d'accélérer la phase de transition jusqu'à l'obtention du niveau dépression cible dans la pile à combustible.

En référence à la fig.3A, lorsque le système électrochimique 1 fonctionne en dépression, ici lorsque la pile à combustible 2 fonctionne à faible puissance électrique générée, par exemple en régime de courant imposé avec une faible densité de courant électrique générée, l'air à la pression de référence (ici la pression atmosphérique) entre dans la ligne fluidique d'alimentation Lad par l'entrée Ed. Il traverse le réducteur de pression 6 (qui maintient en outre la pression à l'entrée cathodique Ce de la pile à combustible 2), et présente en sortie une pression prédéfinie inférieure à la pression atmosphérique. Il est alors en dépression. Il traverse ensuite la vanne 7.1 qui l'oriente vers l'humidificateur 5 puis vers le collecteur d'entrée Ce. Après avoir traversé la pile à combustible 2, l'air appauvri en oxygène s'écoule à partir du collecteur de sortie Cs, traverse l'humidificateur 5, puis le régulateur de pression 4 qui ici est totalement ouvert, c'est-à-dire passant et ne contrôle pas la pression puisque que cette fonction de régulation de pression est assurée par le réducteur de pression 6, rejoint la vanne 7.2 dans la mesure où la vanne 8 est fermée, traverse le compresseur 3, puis la vanne 7.3 qui oriente l'air jusqu'à la sortie Sd. Ainsi, l'air étant en dépression à la cathode de la pile à combustible 2, la concentration en oxygène est réduite, ce qui contribue à limiter les phénomènes de dégradation mentionnés précédemment.

En référence à la fig.3B, lorsque le système électrochimique 1 fonctionne en surpression, c'est-à-dire ici lorsque la pile à combustible 2 fournit une puissance électrique supérieure à celle requise pour un fonctionnement en dépression, l'air à la pression de référence (ici la pression atmosphérique) entre par l'entrée Es dans la ligne fluidique d'alimentation Las. Il traverse la vanne 7.2 puis le compresseur 3 qui augmente la pression de l'air. La pression de sortie est alors en surpression. Il traverse ensuite la vanne 7.3 puis la vanne 7.1, l'humidificateur 5 puis rejoint le collecteur d'entrée Ce. Après avoir traversé la pile à combustible 2, l'air s'écoule à partir du collecteur de sortie Cs, traverse l'humidificateur 5, puis le régulateur de pression 4 qui ici maintient constante la pression à l'entrée cathodique de la pile à combustible 2, et rejoint la sortie Ss via la vanne 8. Ainsi, par le fait que l'air à l'entrée cathodique de la pile à combustible 2 est en surpression, on accroît la puissance électrique maximale délivrée par l'empilement de cellules électrochimiques.

Le système électrochimique 1 présente ainsi une configuration simple permettant une commutation entre des fonctionnements en dépression et en surpression, ce qui permet d'optimiser les performances électrochimiques (en surpression) et de minimiser les dégradations des caractéristiques physico-chimiques de la pile à combustible 2 (en dépression). Notons par ailleurs que le fonctionnement en dépression permet d'accélérer la vitesse des gaz et favorise l'évacuation de l'eau des cellules électrochimiques, ce qui contribue également à réduire la cinétique chimique de la corrosion du support carboné (laquelle nécessite la présence d'eau).

Le système électrochimique 1 peut comporter un contrôleur (non représenté), connecté à la charge électrique, ainsi qu'aux vannes 7 (i.e. les vannes 7.1, 7.2, 7.3) et 8. Il mesure par exemple le courant électrique imposé à la pile à combustible 2 et le compare à la valeur seuil prédéfinie, par exemple à 0.2 A/cm². Il est alors adapté à assurer la commutation du système électrochimique 1 du fonctionnement en dépression au fonctionnement en surpression, et inversement, selon que le courant électrique mesuré est supérieur ou inférieur à une valeur seuil prédéfinie.

Notons par ailleurs, que la commutation entre les fonctionnements en dépression et en surpression, c'est-à-dire la fermeture/ ouverture des vannes 7, 8, n'est pas immédiate, et peut alors se traduire par un régime transitoire de quelques secondes dans laquelle la pile à combustible 2 n'est pas alimentée en gaz comburant, ou est sous-alimentée. Cette pénurie d'oxygène peut être avantageuse dans la mesure où elle peut permettre la régénération de la couche active cathodique par la réversibilité de certains phénomènes de dégradation, comme notamment l'oxydation du platine.

Par ailleurs, pour limiter l'impact de la pénurie d'oxygène sur la puissance électrique générée, le système électrochimique 1 comporte avantageusement une source électrique complémentaire, telle qu'une batterie ou un supercondensateur, par exemple connectée en parallèle de la pile à combustible 2, et adaptée à suppléer à la pile à combustible 2 en cas de diminution brusque et momentanée de la puissance électrique générée par cette dernière. Différentes architectures électriques sont possibles de la pile à combustible 2 alors hybridée à la source électrique complémentaire.

Par ailleurs, en cas d'oscillations et de forte dynamique de la sollicitation en puissance du système électrochimique 1, le contrôleur peut prévoir une temporisation, par exemple d'une dizaine de secondes, pour éviter une commutation intempestive ou trop fréquente. De plus, toujours pour éviter les commutations intempestives, il est préférable que la consommation électrique des éléments auxiliaires du système électrochimique 1 (vannes, régulateur de pression, réducteur de pression 6...) en fonctionnement en dépression soit inférieure à celle des éléments auxiliaires en fonctionnement en surpression.

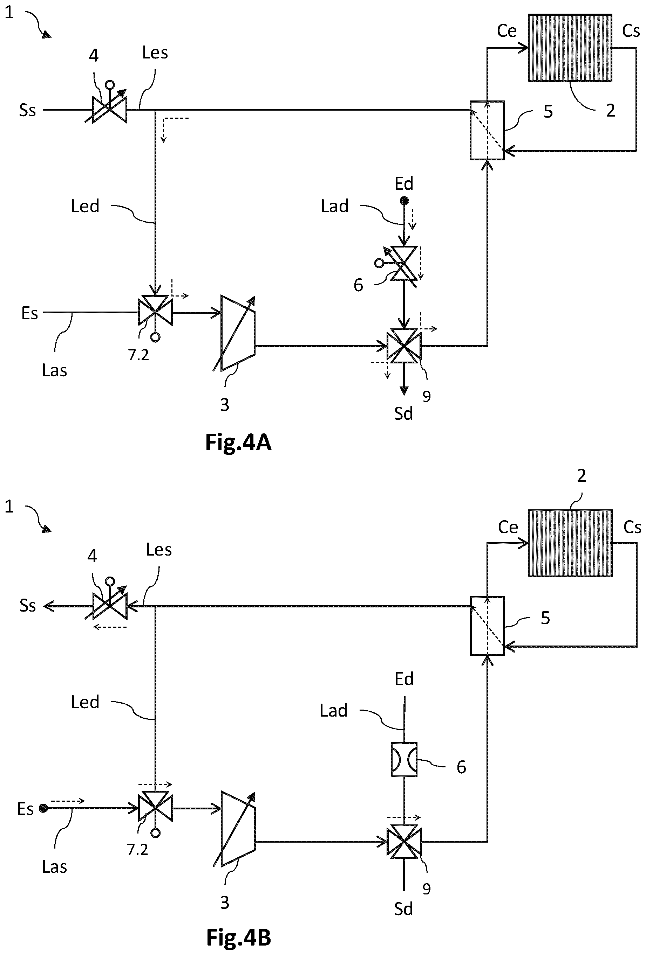

La figure 4A illustre de manière schématique et partielle un système électrochimique 1 selon une variante du premier mode de réalisation, dans le cas d'un fonctionnement en dépression (le fonctionnement en surpression n'est pas décrit en détail mais se déduit aisément de la fig.3B et de la fig.4B). Dans cet exemple, la vanne 8 est absente et est remplacée par le régulateur de pression 4. Celui-ci est alors adapté à bloquer ou autoriser l'écoulement d'air, selon que le système électrochimique 1 fonctionne respectivement en dépression (fig.4A) ou en surpression (fig.4B). Il peut être ici connecté au contrôleur mentionné précédemment. Par ailleurs, la vanne 7.3 est omise et la vanne 7.1 est remplacée par une vanne quatre voies 9 qui comporte une entrée raccordée au compresseur 3, une entrée raccordée au réducteur de pression 6, une sortie raccordée à la sortie Sd et une sortie raccordée à l'humidificateur 5. Ainsi, en fonctionnement en dépression, la vanne quatre voies 9 reçoit l'air provenant du réducteur de pression 6 et l'oriente vers l'humidificateur 5. Par ailleurs, elle reçoit également l'air provenant du compresseur 3 et l'oriente vers la sortie Sd. En fonctionnement en surpression, comme l'indique la fig.4B, la vanne quatre voies 9 est fermée dans son raccord avec le réducteur de pression 6 et dans son raccord avec la sortie Sd. En revanche, elle reçoit l'air provenant du compresseur 3 et l'oriente vers l'humidificateur 5.

La figure 4B illustre de manière schématique et partielle un système électrochimique 1 selon une autre variante du premier mode de réalisation, dans le cas d'un fonctionnement en surpression (le fonctionnement en dépression n'est pas décrit en détail mais se déduit aisément de la fig.3A et de la fig.4A). Dans cet exemple, le réducteur de pression 6 n'est pas un détendeur ou un organe équivalent adapté à réguler la pression aval, mais un conduit fluidique induisant une perte de charge prédéfinie. Ainsi, en fonctionnement en dépression, la pression de l'air en sortie du réducteur de pression 6 est inférieure à la pression atmosphérique de l'air entrant d'une constante prédéfinie. L'air est alors effectivement en dépression à l'entrée cathodique de la pile à combustible 2. Cette variante de réalisation peut être choisie notamment lorsque le débit d'air dans les lignes fluidiques est constant ou quasi constant, de manière à induire dans le réducteur de pression 6, une perte de charge de valeur également constante ou quasi constante. Celle-ci est de préférence prédéfinie de manière à maintenir une tension électrique de la pile à combustible 2 à une valeur inférieure ou égale à 0.8V, et de préférence comprise entre 0.7V et 0.8V. Cependant, en variante, une valeur de tension électrique de cellules de la pile à combustible 2 inférieure à 0.7 V peut également être avantageuse dans la mesure où elle peut permettre la régénération de la couche active cathodique par la réversibilité de certains phénomènes de dégradation, comme notamment l'oxydation du platine. La vanne quatre voies 9 présente un fonctionnement identique à celui décrit en référence à la fig.4A.

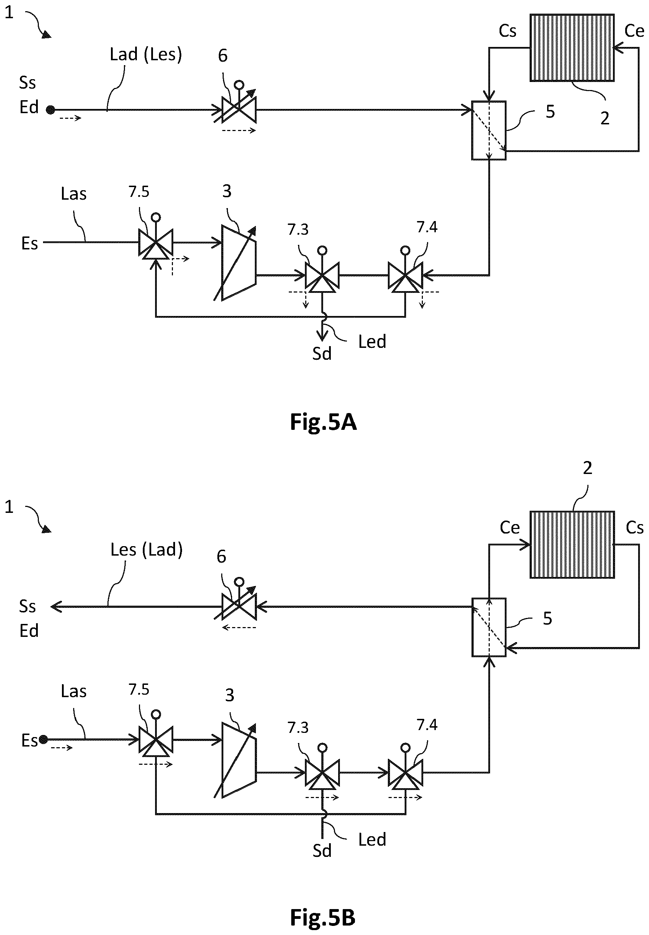

Les figures 5A et 5B illustrent schématiquement et partiellement un système électrochimique 1 selon un deuxième mode de réalisation, dans lequel il est également apte à commuter entre un fonctionnement en dépression (fig.5A) et un fonctionnement en surpression (fig.5B). Dans cet exemple, la pompe 3 est un compresseur.

Le système électrochimique commutable 1 selon ce mode de réalisation se distingue de celui illustré sur les fig.3A et 3B essentiellement en ce que l'entrée Ed est confondue avec la sortie Ss. En revanche, l'entrée Es est distincte de la sortie Sd. Il en ressort que la ligne fluidique d'alimentation Lad est confondue avec la ligne fluidique d'évacuation Les. En revanche, la ligne fluidique d'alimentation Las est au moins en partie distincte de la ligne fluidique d'évacuation Led.

La ligne fluidique Lad, Les relie l'entrée Ed et la sortie Ss à une deuxième ouverture de la pile à combustible qui joue le rôle de collecteur d'entrée Ce lors du fonctionnement en dépression et de collecteur de sortie Cs lors du fonctionnement en surpression. Elle comporte un réducteur/régulateur de pression 6 qui est adapté à réduire la pression et à réguler la pression aval lors du fonctionnement en dépression, et à réguler la pression amont lors du fonctionnement en surpression.

Par ailleurs, la ligne fluidique d'alimentation Las relie l'entrée Es à une première ouverture de la pile à combustible qui joue le rôle de collecteur d'entrée Ce lors du fonctionnement en surpression et de collecteur de sortie Cs lors du fonctionnement en dépression. Elle comporte, à partir de l'entrée Es, une vanne trois voies 7.5 qui comporte une entrée raccordée à une vanne trois voies 7.4, le compresseur 3, une vanne trois voies 7.3 qui comporte une sortie raccordée à la sortie Sd, et la vanne trois voies 7.4 qui comporte une sortie raccordée à la vanne 7.5. En variante, les vannes 7.3 et 7.4 peuvent ne former qu'une seule vanne quatre voies.

Dans cette configuration, la pile à combustible 2 change de sens d'écoulement d'air lors de la commutation entre les fonctionnements en dépression (fig.5A) et en surpression (fig.5B), alors que le compresseur 3 ne change pas de sens.

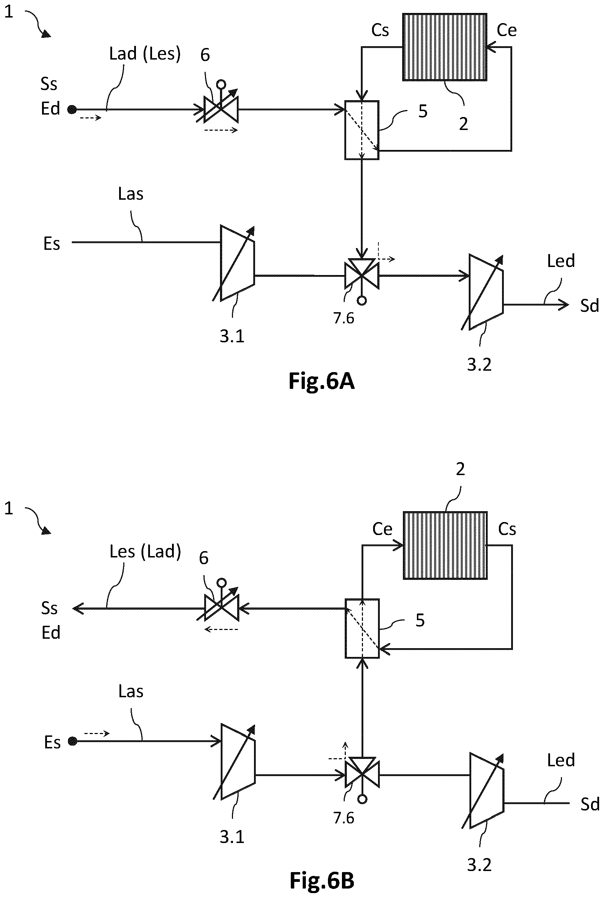

Les figures 6A et 6B illustrent de manière schématique et partielle un système électrochimique 1 selon une variante du deuxième mode de réalisation, en fonctionnement en dépression (fig.6A) et en surpression (fig.6B). Dans cet exemple, le système électrochimique 1 se distingue de celui illustré sur les fig.5A et 5B essentiellement en ce qu'il comporte deux compresseurs distincts 3.1, 3.2. Un premier compresseur 3.1 est situé sur la ligne fluidique d'alimentation Las, entre l'entrée Es et une vanne trois voies V3 raccordée à la première ouverture. Le deuxième compresseur 3.2 est situé sur la ligne fluidique d'évacuation Led, entre la vanne V3 et la sortie Sd.

En référence à la fig.6A, la ligne fluidique d'évacuation Led comporte, à partir du collecteur de sortie Cs, l'humidificateur 5, une vanne trois voies 7.6, et le compresseur 3.2, et rejoint la sortie Sd. En référence à la fig.6B, la ligne fluidique d'alimentation Las comporte, à partir de l'entrée Es, le compresseur 3.1, la vanne trois voies 7.6, l'humidificateur 5, et rejoint le collecteur d'entrée Ce. Ainsi, l'écoulement d'air dans la pile à combustible 2 change de sens avec la commutation entre les fonctionnements en dépression et en surpression ; en revanche, le sens d'écoulement d'air dans les compresseurs 3.1, 3.2 reste le même.

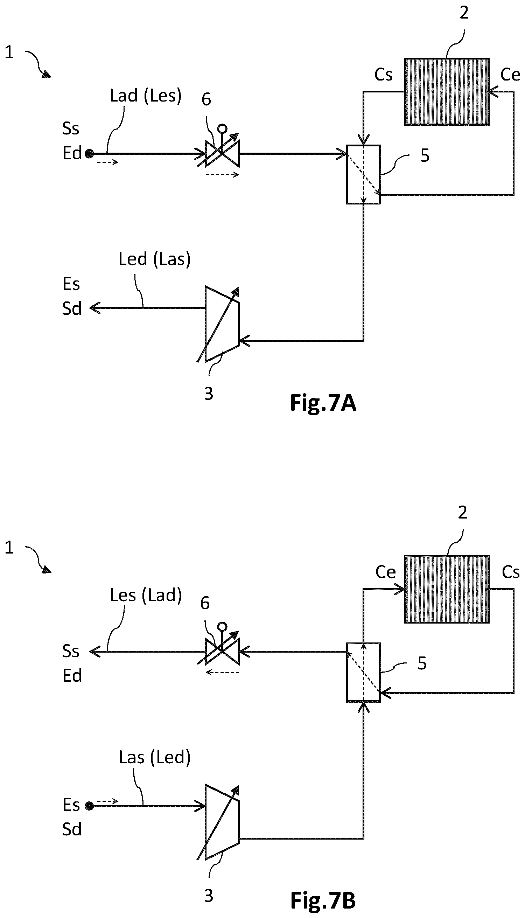

Les figures 7A et 7B illustrent schématiquement et partiellement un système électrochimique 1 selon un troisième mode de réalisation, dans lequel il est apte à commuter entre un fonctionnement en dépression (fig.7A) et un fonctionnement en surpression (fig.7B).

Le système électrochimique commutable 1 se distingue de celui illustré sur les figures 5A et 5B essentiellement en ce que l'entrée Ed est confondue avec la sortie Ss, et l'entrée Es est confondue avec la sortie Sd.

Il en ressort que la ligne fluidique d'alimentation Lad est confondue avec la ligne fluidique d'évacuation Les, et que la ligne fluidique d'alimentation Las est également confondue avec la ligne fluidique d'évacuation Sed.

Le régulateur de pression et le réducteur de pression 6 sont un même élément, disposé sur la ligne fluidique Lad, Les. Un seul compresseur 3 est ici présent, disposé sur la ligne fluidique Las, Led.

Dans cette configuration, la pile à combustible 2 ainsi que le compresseur 3 change de sens d'écoulement d'air lors de la commutation entre les fonctionnements en dépression (fig.7A) et en surpression (fig.7B), tout comme le compresseur 3.

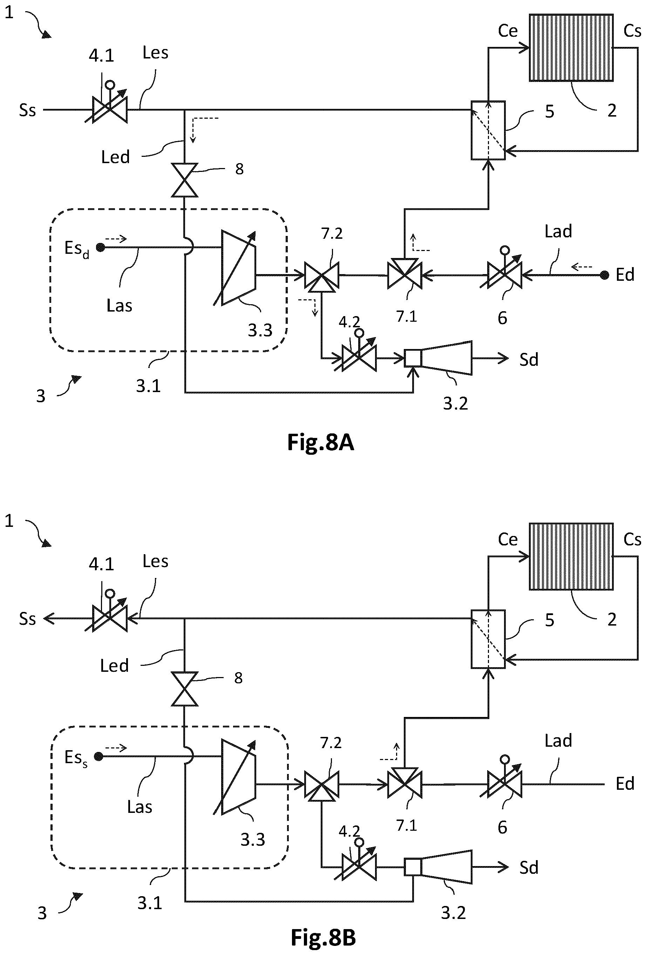

Les figures 8A et 8B illustrent un système électrochimique 1 selon une variante de celui illustré sur les fig.3A et 3B, dans lequel la pompe 3 comporte une source de gaz comprimé et un éjecteur. Plus précisément, la pompe 3 comporte un éjecteur 3.2 et une source de gaz comprimé 3.1, laquelle étant formée d'un compresseur 3.3 raccordé à l'entrée d'air Es. On note alors Es_{d} l'entrée d'air Es du compresseur 3.3 lorsque cet air est le fluide moteur de l'éjecteur 3.2 et n'est donc pas destiné à être fourni à la pile à combustible 2 (donc en fonctionnement en dépression - fig.8A). En revanche, on note Esₛ la même entrée d'air lorsque cet air est destiné à être fourni à la pile à combustible 2 et non pas à l'éjecteur 3.2 (donc en fonctionnement en surpression - fig.8B).

Le système électrochimique commutable 1 comporte ici, dans le cas où l'on considère le fonctionnement en dépression (fig.8A) :
o Sur la ligne fluidique d'alimentation Lad, à partir de l'entrée Ed jusqu'au collecteur Ce :
   - un réducteur de pression 6 disposé sur la partie propre de la ligne fluidique d'alimentation Lad ;
   - une vanne trois voies 7. 1 ;
   - un humidificateur 5, disposé sur la partie commune des lignes fluidiques d'alimentation Lad et Las et sur une partie commune des lignes fluidiques d'évacuation Led et Les ;
o Sur la ligne fluidique d'évacuation Led, à partir du collecteur Cs et jusqu'à la sortie Sd :
   - l'humidificateur 5 ;
   - une vanne 8 ;
   - la pompe 3, celle-ci étant formée de la source 3.1, c'est-à-dire du compresseur 3.3 raccordée à l'entrée Es_{d}; d'une vanne trois voies 7.2 qui raccorde la sortie du compresseur 3.3 à l'entrée primaire de l'éjecteur 3.2 par l'intermédiaire d'un régulateur de pression 4.2 ; et de l'éjecteur 3.2 dont l'entrée secondaire est raccordée à la sortie de la vanne 8.

Si l'on considère le fonctionnement en surpression (fig.8B), le système électrochimique commutable 1 comporte :
o Sur la ligne fluidique d'alimentation Las, à partir de l'entrée Esₛ jusqu'au collecteur Ce :
   - le compresseur 3.3 ;
   - la vanne trois voies 7.2 ;
   - la vanne trois voies 7.1 ;
   - l'humidificateur 5 ;
o Sur la ligne fluidique d'évacuation Les, à partir du collecteur Cs jusqu'à la sortie Ss :
   - l'humidificateur 5 ;
   - un régulateur de pression 4.1.

Dans ce mode de réalisation, le réducteur de pression 6 est distinct du régulateur de pression 4. Cependant, concernant la disposition des vannes et le régulateur 4 et le réducteur 6, divers ajustements peuvent être effectués. Ainsi, entre la vanne trois voies 7.2 et l'entrée primaire de l'éjecteur 3.2, un régulateur de pression 4.2 est ici présent (par ex. un détendeur ou un orifice calibré), mais il peut être absent. Dans cet exemple, le réducteur de pression 6 assure avantageusement une régulation de la pression aval (fonctionnement en dépression - fig.8A), et le régulateur de pression 4.1 assure la régulation de la pression amont (fonctionnement en surpression - fig.8B).

En référence à la fig.8A, lorsque le système électrochimique 1 fonctionne en dépression, l'air à la pression de référence (ici la pression atmosphérique) entre dans la ligne fluidique d'alimentation Lad par l'entrée Ed. Il traverse le réducteur de pression 6 (qui maintient en outre la pression à l'entrée cathodique Ce de la pile à combustible 2), et présente en sortie une pression prédéfinie inférieure à la pression atmosphérique. Il est alors en dépression. Il traverse ensuite la vanne 7.1 qui l'oriente vers l'humidificateur 5 puis vers le collecteur d'entrée Ce. Après avoir traversé la pile à combustible 2, l'air appauvri en oxygène s'écoule à partir du collecteur de sortie Cs, traverse l'humidificateur 5, puis la vanne 8, et rejoint l'entrée secondaire de l'éjecteur 3.2 qui l'aspire et le refoule à la sortie Sd. Cette aspiration est obtenue par le fluide moteur fourni par la source 3.1, c'est-à-dire par l'air fourni à l'entrée Es_{d} qui traverse le compresseur 3.3 puis la vanne 7.2 pour rejoindre l'entrée primaire de l'éjecteur 3.2. Ainsi, l'air (fourni par l'entrée Ed) étant en dépression à la cathode de la pile à combustible 2, la concentration en oxygène est réduite, ce qui contribue à limiter les phénomènes de dégradation mentionnés précédemment. Le niveau de dépression peut être ajusté de manière à respecter une tension de cellule cible, ou une pression cible dans la pile à combustible 2. Un capteur de pression peut alors être disposé sur la ligne Lad ou la ligne Led.

En référence à la fig.8B, lorsque le système électrochimique 1 fonctionne en surpression, c'est-à-dire ici lorsque la pile à combustible 2 fournit une puissance électrique supérieure à celle requise pour un fonctionnement en dépression, l'air à la pression de référence (ici la pression atmosphérique) entre par l'entrée Esₛ dans la ligne fluidique d'alimentation Las. Il traverse le compresseur 3.3 qui en augmente la pression. La pression de sortie est alors en surpression. Il traverse ensuite la vanne 7.2 puis la vanne 7.1, l'humidificateur 5 puis rejoint le collecteur d'entrée Ce. Après avoir traversé la pile à combustible 2, l'air s'écoule à partir du collecteur de sortie Cs, traverse l'humidificateur 5, puis le régulateur de pression 4 (la vanne 8 étant fermée) qui ici maintient constante la pression à l'entrée cathodique de la pile à combustible 2, et rejoint la sortie Ss. Ainsi, par le fait que l'air à l'entrée cathodique Ce de la pile à combustible 2 est en surpression, on accroît la puissance électrique maximale délivrée par l'empilement de cellules électrochimiques.

Par ailleurs, le compresseur 3.3, utilisé lors du fonctionnement en surpression, est avantageusement mis à profit lors du fonctionnement en dépression. En fonctionnement en dépression (fig.8A), le compresseur 3.3 peut être piloté pour fournir un débit d'air permettant de maintenir constante la pression à l'entrée d'un détenteur 4.2 disposé entre la vanne 7.2 et l'éjecteur 3.2. Ce détendeur 4.2 peut être piloté pour obtenir un débit du fluide moteur dans l'éjecteur 3.2 qui corresponde au débit d'air aspiré souhaité au sein de la pile à combustible 2, ce débit d'air aspiré correspondant alors au point de fonctionnement en densité de courant cible lors, par exemple, d'une phase de régénération. Pour faciliter le pilotage du compresseur 3.3, il est possible de prévoir un réservoir d'air comprimé en aval et/ou en amont du détecteur 4.2, permettant ainsi de lisser ou amortir les variations de débit d'air dans la pile à combustible 2. A noter qu'un dispositif de mesure du débit d'air en entrée de pile (non représenté) peut être utile, voire nécessaire pour le pilotage du débit d'air dans la pile à combustible 2.

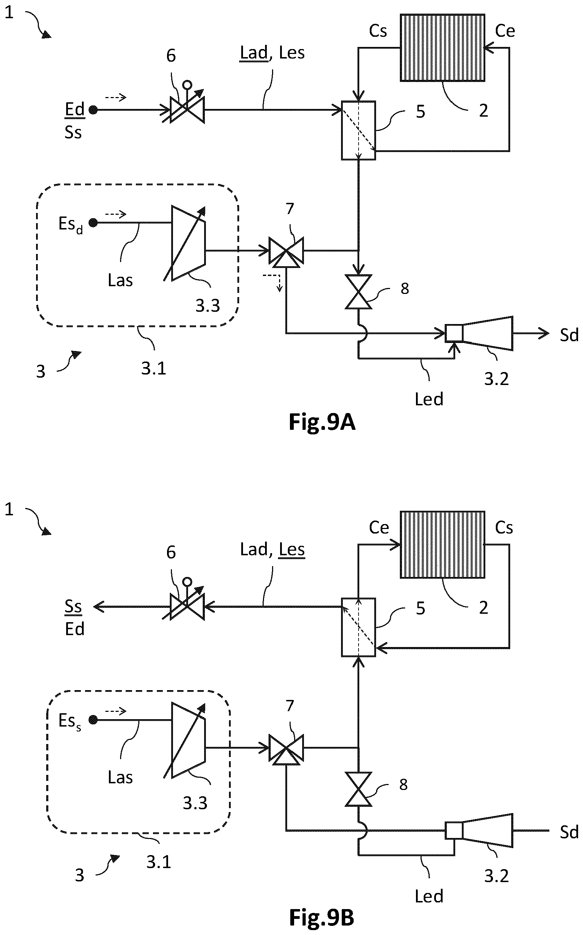

Les figures 9A et 9B illustrent de manière schématique et partielle un système électrochimique 1 selon une autre variante du deuxième mode de réalisation, en fonctionnement en dépression (fig.9A) et en surpression (fig.9B). Dans cet exemple, le système électrochimique 1 se distingue de celui illustré sur les fig.5A et 5B essentiellement en ce que la pompe 3 comporte une source 3.1 et un éjecteur 3.2.

Le système électrochimique commutable 1 comporte ici, dans le cas où l'on considère le fonctionnement en dépression (fig.9A) :
o Sur la ligne fluidique d'alimentation Lad, à partir de l'entrée Ed jusqu'au collecteur Ce :
   - un réducteur de pression 6 qui est adapté à réduire la pression et à réguler la pression aval lors du fonctionnement en dépression, et à réguler la pression amont lors du fonctionnement en surpression ;
   - un humidificateur 5 ;
o Sur la ligne fluidique d'évacuation Led, à partir du collecteur Cs et jusqu'à la sortie Sd :
   - l'humidificateur 5 ;
   - une vanne 8 ;
   - la pompe 3, celle-ci étant formée de la source 3.1, c'est-à-dire du compresseur 3.3 raccordée à l'entrée Es_{d}; d'une vanne trois voies 7 qui raccorde la sortie du compresseur 3.3 à l'entrée primaire de l'éjecteur 3.2 ; et de l'éjecteur 3.2, dont l'entrée secondaire est raccordée à la sortie de la vanne 8.

Si l'on considère le fonctionnement en surpression (fig.9B), le système électrochimique commutable 1 comporte :
o Sur la ligne fluidique d'alimentation Las, à partir de l'entrée Esₛ jusqu'au collecteur Ce :
   - le compresseur 3.3 ;
   - la vanne trois voies 7 ;
   - l'humidificateur 5 ;
o Sur la ligne fluidique d'évacuation Les, à partir du collecteur Cs jusqu'à la sortie Ss :
   - l'humidificateur 5 ;
   - le réducteur de pression 6.

La ligne fluidique Lad, Les relie l'entrée Ed et la sortie Ss à une deuxième ouverture de la pile à combustible qui joue le rôle de collecteur d'entrée Ce lors du fonctionnement en dépression et de collecteur de sortie Cs lors du fonctionnement en surpression. Par ailleurs, la ligne fluidique d'alimentation Las relie l'entrée Es à une première ouverture de la pile à combustible qui joue le rôle de collecteur d'entrée Ce lors du fonctionnement en surpression et de collecteur de sortie Cs lors du fonctionnement en dépression.

Dans cette configuration, la pile à combustible 2 change de sens d'écoulement d'air lors de la commutation entre les fonctionnements en dépression (fig.9A) et en surpression (fig.9B), alors que le compresseur 3.3 ne change pas de sens. La pression dans la pile à combustible 2 peut être pilotée par le réducteur de pression 6 à la fois en fonctionnement en dépression et en surpression lorsqu'il est adapté pour cela. Sinon, un deuxième régulateur de pression est prévu. Ici également, un régulateur de pression (ou un orifice calibré) peut être disposé entre la vanne 7 et l'entrée primaire de l'éjecteur 3.2. Le fonctionnement du système électrochimique 1 est similaire à celui décrit en référence aux fig.5A et 5B. Le fait de changer le sens de circulation a un avantage. Les vitesses fluides en sortie sont plus faibles pour un mode en surpression. En mode dépression, avec le sens de circulation inversé, la vitesse de fluide dans cette zone va être supérieure, ce qui va permettre une meilleure homogénéisation des gaz et de l'humidité dans la cellule.

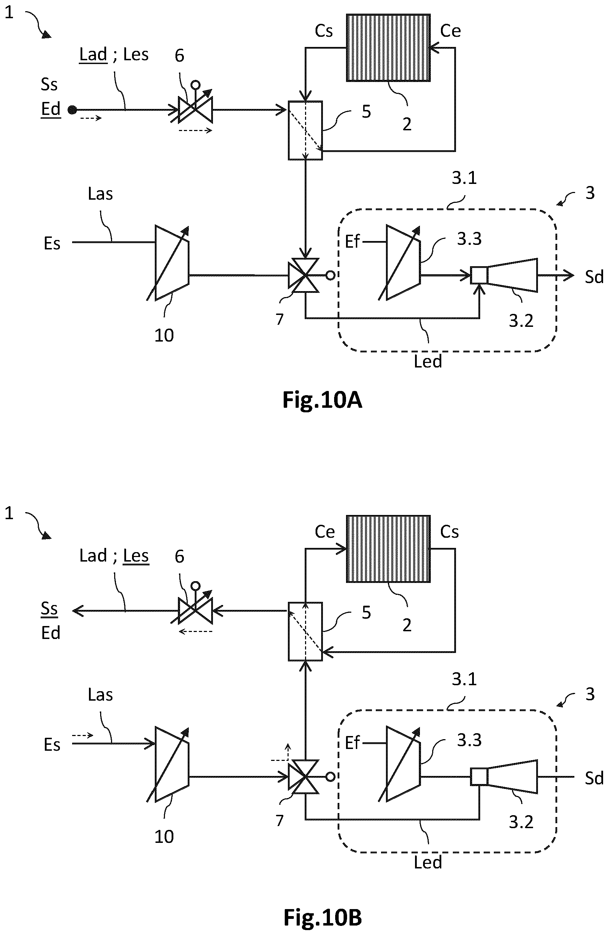

Les figures 10A et 10B illustrent de manière schématique et partielle un système électrochimique 1 selon une variante du deuxième mode de réalisation, en fonctionnement en dépression (fig.10A) et en surpression (fig.10B). Dans cet exemple, le système électrochimique 1 se distingue de celui illustré sur les fig.9A et 9B essentiellement en ce qu'il comporte deux compresseurs distincts 3.3, 10. Un premier compresseur 10 est situé sur la ligne fluidique d'alimentation Las, entre l'entrée Es et une vanne trois voies 7. Le deuxième compresseur 3.3 est situé sur la ligne fluidique d'évacuation Led, entre la vanne 7 et la sortie Sd. Autrement dit, en fonctionnement en dépression, l'air dans la pile à combustible 2 est aspiré par la pompe 3 formée du compresseur 3.3 et de l'éjecteur 3.2. Le compresseur 10 est alors inactif. En revanche, en fonctionnement en surpression, l'air dans la pile à combustible 2 est propulsé par le compresseur 10, la source 3 étant alors inactive.

En référence à la fig.10A, en fonctionnement en dépression, l'air est aspiré à partir de l'entrée Ed, circule dans la ligne fluidique Lad, passe le réducteur de pression 6 puis l'humidificateur 5 pour entrer dans la pile à combustible par le collecteur Ce. Il ressort par le collecteur Cs, traverse l'humidificateur 5 puis la vanne trois voies 7, pour ensuite rejoindre l'entrée secondaire de l'éjecteur 3.2 qui l'évacue ensuite par la sortie Sd. Le fluide moteur est ici de l'air fourni à l'entrée Ef, qui traverse le compresseur 3.3 pour rejoindre l'entrée primaire de l'éjecteur 3.2. Comme indiqué précédemment, différents éléments peuvent être présents en amont de l'entrée primaire de l'éjecteur 3.2, comme par exemple un régulateur de pression, une source additionnelle d'air comprimé, etc.

En référence à la fig.10B, en fonctionnement en surpression, l'air entre par l'entrée Es puis traverse le compresseur 10, la vanne 7, l'humidificateur 5, pour rejoindre ainsi le collecteur Ce. Il ressort ensuite par le collecteur Cs, traverse l'humidificateur 5, le réducteur de pression 6 et est ensuite évacué par la sortie S. La source 3 est alors inactive. Ainsi, l'écoulement d'air dans la pile à combustible 2 change de sens avec la commutation entre les fonctionnements en dépression et en surpression ; en revanche, le sens d'écoulement d'air dans les compresseurs 3.3 et 10 reste le même.

En variante, lors du fonctionnement en surpression, le compresseur 3.3 peut fonctionner et remplir un réservoir tampon en air comprimé, lequel est alors raccordé à l'entrée primaire de l'éjecteur 3.2. Ce réservoir tampon est ouvert lors du fonctionnement en dépression, et le compresseur 3.3 peut alors être inactif.

Cette variante du deuxième mode de réalisation est avantageuse lorsque les compresseurs 10 et 3.3 sont dimensionnés pour leur fonctionnement propre, c'est-à-dire pour le fonctionnement en surpression pour le compresseur 10, et pour le fonctionnement en dépression pour le compresseur 3.3. Il est alors possible de réduire les coûts, voire d'améliorer le rendement.

Par ailleurs, il est possible d'ajouter une vanne trois voies entre le compresseur 10 et la vanne 7, qui peut réorienter le flux d'air provenant de ce compresseur 10 vers une sortie additionnelle, afin par exemple de le maintenir en fonctionnement ou pour compenser son inertie en phase d'arrêt.

Des modes de réalisation particuliers viennent d'être décrits. Différentes variantes et modifications apparaîtront à l'homme du métier.

Ainsi, comme indiqué précédemment, la commutation peut être effectuée selon que la densité de courant électrique est inférieure ou supérieure à une valeur de l'ordre de 0.2A/cm², et/ou que la tension électrique des cellules (ou tension moyenne) est supérieure ou égale à 0.8V. La commutation dépend ainsi de la valeur d'un paramètre d'intérêt, qui peut être représentatif de la puissance électrique générée par la pile à combustible, de la densité de courant ou de la tension électrique. Ce paramètre d'intérêt peut également être une durée de fonctionnement dans le régime en surpression ou en dépression. Il peut également être représentatif d'une dégradation de propriétés physico-chimiques de la pile à combustible. Ainsi, il peut y avoir commutation dans le régime en dépression lorsque la tension électrique des cellules (ou tension moyenne) est inférieure de 30 mV par rapport à celle non dégradée ou régénérée, de manière à assurer une régénération de propriétés physico-chimiques de la pile à combustible, notamment de l'oxydation du platine (phénomène réversible). Il peut ensuite y avoir commutation dans le régime en surpression notamment lorsque la durée de fonctionnement de la pile à combustible dans le régime en dépression atteint une valeur prédéfinie.

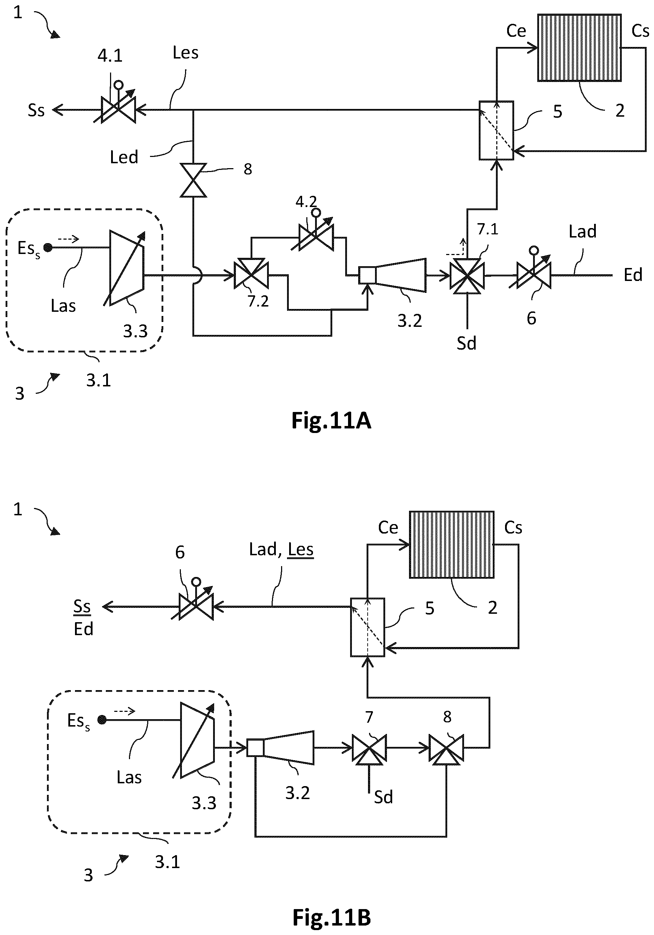

Par ailleurs, la figure 11A illustre une variante du système électrochimique 1 représenté sur les fig.8A et 8B. Dans cet exemple (correspondant ici au fonctionnement en surpression), l'éjecteur 3.2 est raccordé à la vanne 7.1, laquelle est alors une vanne quatre voies (mais elle pourrait évidemment être remplacée par deux vannes trois voies). En surpression, l'air provenant de l'entrée Esₛ (et destiné à alimenter la pile 2) traverse alors l'éjecteur 3.2, préférentiellement en passant par l'entrée secondaire pour minimiser les pertes de charge. Le fonctionnement en dépression et en surpression est similaire à celui décrit précédemment.

Par ailleurs, la figure 11B illustre une variante du système électrochimique 1 représenté sur les fig.9A et 9B. Dans cet exemple (correspondant ici au fonctionnement en surpression), sur la ligne Las, on trouve le compresseur 3.3, l'éjecteur 3.2, une vanne trois voies 7 (laquelle oriente vers la sortie Sd), une vanne trois voies 8 (laquelle oriente vers l'entrée secondaire de l'éjecteur 3.2), puis l'humidificateur 5 et l'entrée de la pile 2. En surpression, l'air provenant de l'entrée Esₛ (et destiné à alimenter la pile 2) traverse alors l'éjecteur 3.2 par l'entrée primaire. De façon similaire à la figure 11A, l'homme de l'art pourra préférentiellement passer par l'entrée secondaire pour minimiser les pertes de charge en surpression. Le fonctionnement en dépression et en surpression est similaire à celui décrit précédemment.

## Revendications

1. Système électrochimique (1), adapté à fonctionner en dépression vis-à-vis d'une pression de référence prédéfinie, comportant :
o une pile à combustible (2), comportant une entrée cathodique (Ce) et une sortie cathodique (Cs) adaptées à assurer un écoulement d'oxygène dans la pile à combustible (2) ;
o une première ligne fluidique d'alimentation (Lad), reliant une première entrée (Ed) d'oxygène à la pression de référence à l'entrée cathodique (Ce) ;
o une première ligne fluidique d'évacuation (Led), reliant la sortie cathodique (Cs) à une première sortie (Sd) ;
o un réducteur de pression (6), disposé sur la première ligne fluidique d'alimentation (Lad), et adapté à imposer à l'oxygène le traversant une pression inférieure à la pression de référence ;
o une pompe (3) adaptée à imposer un débit d'oxygène dans les premières lignes fluidiques d'alimentation (Lad) et d'évacuation (Led), la pompe (3) étant disposée sur la première ligne fluidique d'évacuation (Led), de sorte qu'en fonctionnement en dépression, l'oxygène circule à partir de la première entrée (Ed) jusqu'à la première sortie (Sd), la pression d'oxygène à l'entrée cathodique (Ce) étant en dépression vis-à-vis de la pression de référence ;
o **caractérisé en ce que** le système électrochimique (1) est adapté à commuter entre le fonctionnement en dépression et un fonctionnement dit en surpression vis-à-vis de la pression de référence, et comporte :
• une deuxième ligne fluidique d'alimentation (Las), reliant une deuxième entrée (Es) d'oxygène à la pression de référence à l'entrée cathodique (Ce) ;
• une deuxième ligne fluidique d'évacuation (Les), reliant la sortie cathodique (Cs) à une deuxième sortie (Ss) ;
• un régulateur de pression (4), adapté à maintenir constante la pression d'oxygène à l'entrée cathodique (Ce), et disposé sur la deuxième ligne fluidique d'évacuation (Les) ;
• la pompe (3) étant adaptée à imposer un débit d'oxygène dans les deuxièmes lignes fluidiques d'alimentation (Las) et d'évacuation (Les), et étant disposée sur la deuxième ligne fluidique d'alimentation (Las) ;
• les deuxièmes lignes fluidiques d'alimentation (Las) et d'évacuation (Les) étant agencées de sorte qu'en fonctionnement en surpression, l'oxygène circule à partir de la deuxième entrée (Es) jusqu'à la deuxième sortie (Ss), la pression d'oxygène à l'entrée cathodique (Ce) étant maintenue en surpression par rapport à la pression de référence.

2. Système électrochimique (1) selon la revendication 1, dans lequel le réducteur de pression (6) est en outre adapté à maintenir constante la pression d'air à l'entrée cathodique (Ce).

3. Système électrochimique (1) selon la revendication 1 ou 2, dans lequel la pompe (3) est un compresseur, ou dans lequel la pompe (3) comporte au moins un éjecteur (3.2) associé à au moins une source (3.1) de gaz comprimé formant un fluide moteur, l'éjecteur (3.2) comportant une entrée primaire reliée à la source (3.1) et une entrée secondaire reliée à la première ligne fluidique d'évacuation (Led).

4. Système électrochimique (1) selon l'une quelconque des revendications 1 à 3, dans lequel la première entrée (Ed) est distincte de la deuxième sortie (Ss), et la première sortie (Sd) est distincte de la deuxième entrée (Es).

5. Système électrochimique (1) selon la revendication 4, dans lequel le réducteur de pression (6) est distinct du régulateur de pression (4).

6. Système électrochimique (1) selon la revendication 4 ou 5, dans lequel la première ligne fluidique d'alimentation (Lad) et la deuxième ligne fluidique d'alimentation (Las) sont raccordées à une même première ouverture de la pile à combustible (2) formant le collecteur d'entrée (Ce) ; et dans lequel la première ligne fluidique d'évacuation (Led) et la deuxième ligne fluidique d'évacuation (Les) sont raccordées à une même deuxième ouverture de la pile à combustible (2) formant le collecteur de sortie (Cs).

7. Système électrochimique (1) selon l'une quelconque des revendications 1 à 3, dans lequel la première entrée (Ed) et la deuxième sortie (Ss) sont confondues, et la première sortie (Sd) et la deuxième entrée (Es) sont distinctes.

8. Système électrochimique (1) selon la revendication 7, dans lequel la première ligne fluidique d'alimentation (Lad) et la deuxième ligne fluidique d'évacuation (Les) sont confondues et sont raccordées à une même deuxième ouverture de la pile à combustible (2) formant le collecteur d'entrée (Ce) en mode dépression et formant le collecteur de sortie (Cs) en mode surpression ; et dans lequel la première ligne fluidique d'évacuation (Led) et la deuxième ligne fluidique d'évacuation (Les) sont en partie distinctes, et sont raccordées à une même première ouverture de la pile à combustible (2) formant le collecteur de sortie (Cs) en mode dépression et formant le collecteur d'entrée (Ce) en mode surpression.

9. Système électrochimique (1) selon la revendication 7 ou 8, comportant une même pompe (3) disposée sur la deuxième ligne fluidique d'alimentation (Las) et sur la première ligne d'évacuation (Led) ; ou comportant une première pompe (3.1) disposée sur la deuxième ligne fluidique d'alimentation (Las), et une deuxième pompe (3.2) distincte de la première pompe (3.1) et disposée sur la première ligne d'évacuation (Led).

10. Système électrochimique (1) selon l'une quelconque des revendications 1 à 3, dans lequel la première entrée (Ed) et la deuxième sortie (Ss) sont confondues, et la première sortie (Sd) et la deuxième entrée (Es) sont confondues.

11. Système électrochimique (1) selon la revendication 10, dans lequel la première ligne fluidique d'évacuation (Led) et la deuxième ligne fluidique d'alimentation (Las) sont confondues, et comporte une même pompe (3).

12. Système électrochimique (1) selon l'une quelconque des revendications 7 à 11, dans lequel le réducteur de pression (6) et le régulateur de pression (4) sont confondus.

13. Système électrochimique (1) selon l'une quelconque des revendications 1 à 9, dans lequel la source (3.1) est un compresseur (3.3) comportant une entrée reliée à la deuxième entrée (Es) et une sortie reliée à l'entrée cathodique (Ce) et à l'entrée primaire de l'éjecteur (3.2).

14. Système électrochimique (1) selon la revendication 13, dans lequel la sortie du compresseur (3.3) est raccordée à l'entrée cathodique (Ce) d'une part et à une entrée de l'éjecteur (3.2) d'autre part par des lignes fluidiques au moins en partie distinctes ; ou est raccordée à l'entrée cathodique (Ce) par une même ligne fluidique passant par une entrée et une sortie de l'éjecteur (3.2).

15. Système électrochimique (1) selon la revendication 14, dans lequel la sortie du compresseur (3.3) est raccordée à l'entrée cathodique (Ce) par une même ligne fluidique passant par l'entrée secondaire et par la sortie de l'éjecteur (3.2).

16. Système électrochimique (1) selon l'une quelconque des revendications 13 à 15, dans lequel la pompe (3) comporte un compresseur (3.3) comportant en entrée reliée à une source de gaz et une sortie reliée à l'entrée primaire de l'éjecteur (3.2), et dans lequel un compresseur (10) distinct du compresseur (3.3) de la pompe (3) est relié à la deuxième entrée (Es) et à l'entrée cathodique (Ce).

17. Procédé de fonctionnement du système électrochimique commutable selon l'une quelconque des revendications 1 à 16, comportant une étape de mesure d'un paramètre d'intérêt qui est un signal électrique représentatif de la puissance électrique générée par la pile à combustible (2) ou de la tension électrique de la pile à combustible (2), ou est une durée de fonctionnement en dépression ou en surpression, et une étape de commutation entre :
o une phase de fonctionnement en dépression lorsque le paramètre d'intérêt atteint une première valeur seuil prédéfinie ; et
o une phase de fonctionnement en surpression lorsque le paramètre d'intérêt atteint une deuxième valeur seuil prédéfinie.

18. Procédé de fonctionnement selon la revendication 17, dans lequel le paramètre d'intérêt est représentatif de la puissance électrique générée par la pile à combustible (2), auquel cas il y a commutation entre : la phase de fonctionnement en dépression lorsque le paramètre d'intérêt est inférieur ou égal à une valeur seuil prédéfinie ; et la phase de fonctionnement en surpression lorsque le paramètre d'intérêt est supérieur à la valeur seuil prédéfinie.

19. Procédé de fonctionnement selon la revendication 17 ou 18, dans lequel le paramètre d'intérêt est en outre représentatif d'une dégradation de propriétés physico-chimiques de la pile à combustible, auquel cas il y a commutation entre : la phase de fonctionnement en dépression lorsque le paramètre d'intérêt atteint une première valeur seuil prédéfinie ; et la phase de fonctionnement en surpression lorsque le paramètre d'intérêt atteint une deuxième valeur seuil prédéfinie ou lorsqu'une durée de fonctionnement en dépression est supérieure ou égale à une valeur seuil prédéfinie.

## Patentansprüche

1. Elektrochemisches System (1), das geeignet ist, gegenüber einem vordefinierten Bezugsdruck in Unterdruck zu arbeiten, das aufweist:
o eine Brennstoffzelle (2), die einen Kathodeneingang (Ce) und einen Kathodenausgang (Cs) aufweist, die geeignet sind, eine Sauerstoffströmung in der Brennstoffzelle (2) zu gewährleisten;
o eine erste Versorgungsfluidleitung (Lad), die einen ersten Sauerstoffeingang (Ed) auf dem Bezugsdruck mit dem Kathodeneingang (Ce) verbindet;
o eine erste Entsorgungsfluidleitung (Led), die den Kathodenausgang (Cs) mit einem ersten Ausgang (Sd) verbindet;
o einen Druckminderer (6), der auf der ersten Versorgungsfluidleitung (Lad) angeordnet und geeignet ist, dem ihn durchquerenden Sauerstoff einen niedrigeren Druck als der Bezugsdruck vorzugeben;
o eine Pumpe (3), die geeignet ist, einen Sauerstoffdurchsatz in den ersten Versorgungs- (Lad) und Entsorgungsfluidleitungen (Led) vorzugeben, wobei die Pumpe (3) auf der ersten Entsorgungsfluidleitung (Led) angeordnet ist, so dass im Unterdruckbetrieb der Sauerstoff ausgehend vom ersten Eingang (Ed) bis zum ersten Ausgang (Sd) strömt, wobei der Sauerstoffdruck am Kathodeneingang (Ce) gegenüber dem Bezugsdruck in Unterdruck ist;
o **dadurch gekennzeichnet, dass** das elektrochemische System (1) geeignet ist, zwischen dem Unterdruckbetrieb und einem sogenannten Überdruckbetrieb gegenüber dem Bezugsdruck umzuschalten, und aufweist:
• eine zweite Versorgungsfluidleitung (Las), die einen zweiten Sauerstoffeingang (Es) auf Bezugsdruck mit dem Kathodeneingang (Ce) verbindet;
• eine zweite Entsorgungsfluidleitung (Les), die den Kathodenausgang (Cs) mit einem zweiten Ausgang (Ss) verbindet;
• einen Druckregler (4), der geeignet ist, den Sauerstoffdruck am Kathodeneingang (Ce) konstant zu halten, und auf der zweiten Entsorgungsfluidleitung (Les) angeordnet ist;
• wobei die Pumpe (3) geeignet ist, einen Sauerstoffdurchsatz in den zweiten Versorgungs- (Las) und Entsorgungsfluidleitungen (Les) vorzugeben, und auf der zweiten Versorgungsfluidleitung (Las) angeordnet ist;
• wobei die zweiten Versorgungs- (Las) und Entsorgungsfluidleitungen (Les) so eingerichtet sind, dass im Überdruckbetrieb der Sauerstoff ausgehend vom zweiten Eingang (Es) bis zum zweiten Ausgang (Ss) strömt, wobei der Sauerstoffdruck am Kathodeneingang (Ce) bezüglich des Bezugsdrucks in Überdruck gehalten wird.

2. Elektrochemisches System (1) nach Anspruch 1, wobei der Druckminderer (6) außerdem geeignet ist, den Luftdruck am Kathodeneingang (Ce) konstant zu halten.

3. Elektrochemisches System (1) nach Anspruch 1 oder 2, wobei die Pumpe (3) ein Kompressor ist, oder wobei die Pumpe (3) mindestens einen Ejektor (3.2) aufweist, der mindestens einer Quelle (3.1) von Druckgas zugeordnet ist, das ein Treibmedium bildet, wobei der Ejektor (3.2) einen mit der Quelle (3.1) verbundenen Primäreingang und einen mit der ersten Entsorgungsfluidleitung (Led) verbundenen Sekundäreingang aufweist.

4. Elektrochemisches System (1) nach einem der Ansprüche 1 bis 3, wobei der erste Eingang (Ed) sich vom zweiten Ausgang (Ss) unterscheidet, und der erste Ausgang (Sd) sich vom zweiten Eingang (Es) unterscheidet.

5. Elektrochemisches System (1) nach Anspruch 4, wobei der Druckminderer (6) sich vom Druckregler (4) unterscheidet.

6. Elektrochemisches System (1) nach Anspruch 4 oder 5, wobei die erste Versorgungsfluidleitung (Lad) und die zweite Versorgungsfluidleitung (Las) an eine gleiche erste Öffnung der Brennstoffzelle (2) angeschlossen sind, die den Eingangskollektor (Ce) bildet; und wobei die erste Entsorgungsfluidleitung (Led) und die zweite Entsorgungsfluidleitung (Les) an eine gleiche zweite Öffnung der Brennstoffzelle (2) angeschlossen sind, die den Ausgangskollektor (Cs) bildet.

7. Elektrochemisches System (1) nach einem der Ansprüche 1 bis 3, wobei der erste Eingang (Ed) und der zweite Ausgang (Ss) vereinigt sind, und der erste Ausgang (Sd) und der zweite Eingang (Es) unterschiedlich sind.

8. Elektrochemisches System (1) nach Anspruch 7, wobei die erste Versorgungsfluidleitung (Lad) und die zweite Entsorgungsfluidleitung (Les) vereinigt und an eine gleiche zweite Öffnung der Brennstoffzelle (2) angeschlossen sind, die den Eingangskollektor (Ce) im Unterdruckmodus und den Ausgangskollektor (Cs) im Überdruckmodus bildet; und wobei die erste Entsorgungsfluidleitung (Led) und die zweite Entsorgungsfluidleitung (Les) zum Teil unterschiedlich sind und an eine gleiche erste Öffnung der Brennstoffzelle (2) angeschlossen sind, die den Ausgangskollektor (Cs) im Unterdruckmodus und den Eingangskollektor (Ce) im Überdruckmodus bildet.

9. Elektrochemisches System (1) nach Anspruch 7 oder 8, das eine gleiche Pumpe (3) auf der zweiten Versorgungsfluidleitung (Las) und auf der ersten Entsorgungsleitung (Led) angeordnet aufweist; oder eine erste Pumpe (3.1) auf der zweiten Versorgungsfluidleitung (Las) angeordnet und eine zweite Pumpe (3.2) anders als die erste Pumpe (3.1) und auf der ersten Entsorgungsleitung (Led) angeordnet aufweist.

10. Elektrochemisches System (1) nach einem der Ansprüche 1 bis 3, wobei der erste Eingang (Ed) und der zweite Ausgang (Ss) vereinigt sind, und der erste Ausgang (Sd) und der zweite Eingang (Es) vereinigt sind.

11. Elektrochemisches System (1) nach Anspruch 10, wobei die erste Entsorgungsfluidleitung (Led) und die zweite Versorgungsfluidleitung (Las) vereinigt sind und eine gleiche Pumpe (3) aufweisen.

12. Elektrochemisches System (1) nach einem der Ansprüche 7 bis 11, wobei der Druckminderer (6) und der Druckregler (4) vereinigt sind.

13. Elektrochemisches System (1) nach einem der Ansprüche 1 bis 9, wobei die Quelle (3.1) ein Kompressor (3.3) ist, der einen Eingang mit dem zweiten Eingang (Es) verbunden und einen Ausgang mit dem Kathodeneingang (Ce) und mit dem Primäreingang des Ejektors (3.2) verbunden aufweist.

14. Elektrochemisches System (1) nach Anspruch 13, wobei der Ausgang des Kompressors (3.3) an den Kathodeneingang (Ce) einerseits und an einen Eingang des Ejektors (3.2) andererseits durch Fluidleitungen angeschlossen ist, die zumindest zum Teil unterschiedlich sind; oder an den Kathodeneingang (Ce) durch eine gleiche Fluidleitung angeschlossen ist, die durch einen Eingang und einen Ausgang des Ejektors (3.2) verläuft.

15. Elektrochemisches System (1) nach Anspruch 14, wobei der Ausgang des Kompressors (3.3) an den Kathodeneingang (Ce) durch eine gleiche Fluidleitung angeschlossen ist, die durch den Sekundäreingang und durch den Ausgang des Ejektors (3.2) verläuft.

16. Elektrochemisches System (1) nach einem der Ansprüche 13 bis 15, wobei die Pumpe (3) einen Kompressor (3.3) aufweist, der einen mit der Gasquelle verbundenen Eingang und einen mit dem Primäreingang des Ejektors (3.2) verbundenen Ausgang aufweist, und wobei ein Kompressor (10) anders als der Kompressor (3.3) der Pumpe (3) mit dem zweiten Eingang (Es) und mit dem Kathodeneingang (Ce) verbunden ist.

17. Betriebsverfahren des umschaltbaren elektrochemischen Systems nach einem der Ansprüche 1 bis 16, das einen Schritt des Messens eines interessierenden Parameters, der ein für die von der Brennstoffzelle (2) erzeugte elektrische Leistung oder für die elektrische Spannung der Brennstoffzelle (2) repräsentatives elektrisches Signal oder eine Dauer eines Unterdruck- oder Überdruckbetriebs ist, und einen Schritt des Umschaltens aufweist zwischen:
o einer Unterdruckbetriebsphase, wenn der interessierende Parameter einen ersten vordefinierten Schwellwert erreicht; und
o einer Überdruckbetriebsphase, wenn der interessierende Parameter einen zweiten vordefinierten Schwellwert erreicht.

18. Betriebsverfahren nach Anspruch 17, wobei der interessierende Parameter für die von der Brennstoffzelle (2) erzeugte elektrische Leistung repräsentativ ist, in welchem Fall es eine Umschaltung gibt zwischen: der Unterdruckbetriebsphase, wenn der interessierende Parameter niedriger als ein oder gleich einem vordefinierten Schwellwert ist; und der Überdruckbetriebsphase, wenn der interessierende Parameter höher als der vordefinierte Schwellwert ist.

19. Betriebsverfahren nach Anspruch 17 oder 18, wobei der interessierende Parameter außerdem für eine Verschlechterung physikalisch-chemischer Eigenschaften der Brennstoffzelle repräsentativ ist, in welchem Fall es eine Umschaltung gibt zwischen: der Unterdruckbetriebsphase, wenn der interessierende Parameter einen ersten vordefinierten Schwellwert erreicht; und der Überdruckbetriebsphase, wenn der interessierende Parameter einen zweiten vordefinierten Schwellwert erreicht oder wenn eine Unterdruckbetriebsdauer länger als ein oder gleich einem vordefinierten Schwellwert ist.

## Claims

1. Electrochemical system (1), designed to operate in underpressure with respect to a predefined reference pressure, comprising:
o a fuel cell (2), comprising a cathode inlet (Ce) and a cathode outlet (Cs) which are designed to ensure a flow of oxygen through the fuel cell (2);
o a first fluid supply line (Lad), connecting a first oxygen inlet (Ed) at the reference pressure to the cathode inlet (Ce);
o a first fluid discharge line (Led), connecting the cathode outlet (Cs) to a first outlet (Sd);
o a pressure reducer (6), arranged on the first fluid supply line (Lad), and designed to impose a pressure lower than the reference pressure on the oxygen passing through it;
o a pump (3) designed to impose an oxygen flow through the first fluid supply (Lad) and discharge (Led) lines, the pump (3) being arranged on the first fluid discharge line (Led), such that when operating in underpressure, the oxygen flows from the first inlet (Ed) to the first outlet (Sd), the oxygen pressure at the cathode inlet (Ce) being in underpressure with respect to the reference pressure;
o **characterized in that** the electrochemical system (1) is designed to switch between operation in underpressure and what is called operation in overpressure with respect to the reference pressure, and comprises:
• a second fluid supply line (Las), connecting a second oxygen inlet (Es) at the reference pressure to the cathode inlet (Ce);
• a second fluid discharge line (Les), connecting the cathode outlet (Cs) to a second outlet (Ss);
• a pressure regulator (4), designed to keep the oxygen pressure at the cathode inlet (Ce) constant, and arranged on the second fluid discharge line (Les);
• the pump (3) being designed to impose an oxygen flow through the second fluid supply (Las) and discharge (Les) lines, and being arranged on the second fluid supply line (Las);
• the second fluid supply (Las) and discharge (Les) lines being designed such that when operating in overpressure, the oxygen flows from the second inlet (Es) to the second outlet (Ss), the oxygen pressure at the cathode inlet (Ce) being kept at overpressure with respect to the reference pressure.

2. Electrochemical system (1) according to Claim 1, in which the pressure reducer (6) is further designed to keep the air pressure at the cathode inlet (Ce) constant.

3. Electrochemical system (1) according to Claim 1 or 2, in which the pump (3) is a compressor, or in which the pump (3) comprises at least one ejector (3.2) associated with at least one compressed gas source (3.1) forming a pump fluid, the ejector (3.2) comprising a primary inlet connected to the source (3.1) and a secondary inlet connected to the first fluid discharge line (Led).

4. Electrochemical system (1) according to any one of Claims 1 to 3, in which the first inlet (Ed) is distinct from the second outlet (Ss), and the first outlet (Sd) is distinct from the second inlet (Es).

5. Electrochemical system (1) according to Claim 4, in which the pressure reducer (6) is separate from the pressure regulator (4).

6. Electrochemical system (1) according to Claim 4 or 5, in which the first fluid supply line (Lad) and the second fluid supply line (Las) are connected to one and the same first opening of the fuel cell (2) forming the inlet manifold (Ce); and in which the first fluid discharge line (Led) and the second fluid discharge line (Les) are connected to one and the same second opening of the fuel cell (2) forming the outlet manifold (Cs).

7. Electrochemical system (1) according to any one of Claims 1 to 3, in which the first inlet (Ed) and the second outlet (Ss) are coincident, and the first outlet (Sd) and the second inlet (Es) are distinct.

8. Electrochemical system (1) according to Claim 7, in which the first fluid supply line (Lad) and the second fluid discharge line (Les) are coincident and are connected to one and the same second opening of the fuel cell (2) forming the inlet manifold (Ce) in underpressure mode and forming the outlet manifold (Cs) in overpressure mode; and in which the first fluid discharge line (Led) and the second fluid discharge line (Les) are partly distinct, and are connected to one and the same first opening of the fuel cell (2) forming the outlet manifold (Cs) in underpressure mode and forming the inlet manifold (Ce) in overpressure mode.

9. Electrochemical system (1) according to Claim 7 or 8, comprising one and the same pump (3) arranged on the second fluid supply line (Las) and on the first discharge line (Led); or comprising a first pump (3.1) arranged on the second fluid supply line (Las), and a second pump (3.2) distinct from the first pump (3.1) and arranged on the first discharge line (Led).

10. Electrochemical system (1) according to any one of Claims 1 to 3, in which the first inlet (Ed) and the second outlet (Ss) are coincident, and the first outlet (Sd) and the second inlet (Es) are coincident.

11. Electrochemical system (1) according to Claim 10, in which the first fluid discharge line (Led) and the second fluid supply line (Las) are coincident, and comprise one and the same pump (3).

12. Electrochemical system (1) according to any one of Claims 7 to 11, in which the pressure reducer (6) and the pressure regulator (4) are coincident.

13. Electrochemical system (1) according to any one of Claims 1 to 9, in which the source (3.1) is a compressor (3.3) comprising an inlet connected to the second inlet (Es) and an outlet connected to the cathode inlet (Ce) and to the primary inlet of the ejector (3.2).

14. Electrochemical system (1) according to Claim 13, in which the outlet of the compressor (3.3) is connected to the cathode inlet (Ce) on the one hand and to an inlet of the ejector (3.2) on the other hand by fluid lines that are at least partly distinct; or is connected to the cathode inlet (Ce) by one and the same fluid line going via an inlet and an outlet of the ejector (3.2).

15. Electrochemical system (1) according to Claim 14, in which the outlet of the compressor (3.3) is connected to the cathode inlet (Ce) by one and the same fluid line going via the secondary inlet and via the outlet of the ejector (3.2).

16. Electrochemical system (1) according to any one of Claims 13 to 15, in which the pump (3) comprises a compressor (3.3) comprising an inlet connected to a gas source and an outlet connected to the primary inlet of the ejector (3.2), and in which a compressor (10) distinct from the compressor (3.3) of the pump (3) is connected to the second inlet (Es) and to the cathode inlet (Ce).

17. Method of operation of the switchable electrochemical system according to any one of Claims 1 to 16, comprising a step of measuring a parameter of interest which is an electrical signal representative of the electrical power generated by the fuel cell (2) or of the voltage of the fuel cell (2), or is a duration of operation in underpressure or in overpressure, and a step of switching between:
o a phase of operating in underpressure when the parameter of interest reaches a first predefined threshold value; and
o a phase of operating in overpressure when the parameter of interest reaches a second predefined threshold value.

18. Operation method according to Claim 17, in which the parameter of interest is representative of the electrical power generated by the fuel cell (2), in which case there is switching between: the phase of operating in underpressure when the parameter of interest is lower than or equal to a predefined threshold value; and the phase of operating in overpressure when the parameter of interest is higher than the predefined threshold value.

19. Operation method according to Claim 17 or 18, in which the parameter of interest is further representative of a deterioration in the physical-chemical properties of the fuel cell, in which case there is switching between: the phase of operating in underpressure when the parameter of interest reaches a first predefined threshold value; and the phase of operating in overpressure when the parameter of interest reaches a second predefined threshold value or when a duration of operation in underpressure is longer than or equal to a predefined threshold value.
